# EUROPÄISCHE PATENTANMELDUNG

(11) **EP 2 332 889 A1**
(43) Veröffentlichungstag der Anmeldung: **15.06.2011**
(21) Anmeldenummer: 10002828.1
(22) Anmeldetag: 17.03.2010
(51) Int. Cl.: C03B 5/04, C03B 5/235, F23C 9/00, F23C 9/06, F23R 3/26

(54) **Verfahren und Vorrichtung zum Schmelzen von Glas**

(30) Priorität: 18.11.2009 DE 102009053755
(71) Anmelder: Linde AG, 80331 München (DE)
(72) Erfinder: Adendorff, Martin, 85386 Eching (DE); Carney, Stephen, 81245 München (DE); Mieth, Rainer, 85570 Ottenhofen (DE); Heymann, Claas, 40625 Düsseldorf (DE)
(74) Vertreter: Schüssler, Andrea

(57) **Zusammenfassung**

Die Erfindung betrifft ein Verfahren und eine Vorrichtung zum Schmelzen von Glas, wobei einem Schmelzofen Brennstoff und Oxidator über eine Brenneranordnung zugeführt werden, um innerhalb des Ofens zu verbrennen. Die Erfindung ist dadurch gekennzeichnet, dass zusätzlich zu dem über die Brenneranordnung zugeführten Brennstoff und Oxidator über eine oder mehrere Strömungsgasdüsen ein Strömungsgas mit einer Geschwindigkeit von wenigstens 50 m/s, vorzugsweise wenigstens 100 m/s besonders bevorzugt wenigstens 150 m/s, in den Ofen eingeführt wird. Durch das Strömungsgas werden Verbrennungsprodukte innerhalb des Ofens mitgerissen und z. B. in die Verbrennungszone zurücktransportiert. Durch diese verbesserte Rezirkulation innerhalb des Ofens wird die Verbrennung verzögert, werden die Spitzentemperaturen verringert und die Erzeugung von thermischen Stickoxiden unterdrückt.

## Beschreibung

Die vorliegende Erfindung betrifft ein Verfahren und eine Vorrichtung zum Schmelzen von Glas.

### Bisheriger Stand der Technik

Es ist bekannt, Glas mit Hilfe eines Glasofens bzw. Glasschmelzofens zu schmelzen, wobei der Ofen über zwei stirnseitig angebrachte Brenner-Ports beheizt wird (Stirnbrenner oder U-Flammbrenner). Über die Brenner-Ports wird ein Brennstoff und ein Oxidator (üblicherweise Luft) zugeführt, und der Brennstoff verbrennt mit dem Oxidator innerhalb des Ofens, um die erforderliche Wärme zum Aufrechterhalten der Glasschmelze zu erzeugen (das Ingangsetzen der Schmelze oder "Antempern" erfolgt in der Regel langsam über Dieselbrenner oder dergleichen). Die Brenner-Ports werden dabei regenerativ im Wechsel betrieben. D. h., nur einem der Brenner-Ports wird Brennstoff und Oxidator (Luft) zugeführt, während die heißen Abgase über die Luftzufuhröffnung des anderen Brenner-Ports abgeführt werden. Somit legen die Gase im Ofen einen U-förmigen Weg zurück. Im Zufuhrweg des Oxidators (Luft) ist stromaufwärts der Zufuhröffnung jeweils ein Wärmetauscher vorgeschaltet. In dem Wärmetauscher befinden sich Wärmespeichersteine, welche in dem Wärmetauscher der einen Seite von den ca. 1.500 °C heißen Abgasen erwärmt werden und in dem Wärmetauscher der anderen Seite ihre Wärme an den zuströmenden Oxidator abgeben und diesen auf die Eintrittstemperatur von ca. 1.200 °C vorwärmen. Nach ca. 20 Minuten wird die Strömungsrichtung umgekehrt. Dieser regenerative Wechselbetrieb (engl. "swap") der Brenner-Ports ist als Siemens-Martin-Verfahren die Grundlage für viele Industrieöfen.

In einer alternativen Bauform sind in den Seitenwänden des Ofens jeweils ein oder (meist) mehrere Brenner-Ports angeordnet, wobei die Brenner-Ports einer Seite jeweils über einen gemeinsamen Wärmetauscher verfügen. Es werden dabei immer nur die Brenner-Ports einer Seite befeuert, während die Abgase über die Brenner-Ports der anderen Seite abgeführt werden. Bei diesen Querbrennerwannen findet also (abgesehen von Verwirbelungserscheinungen) keine Strömungsumkehr statt.

Bei der Verbrennung können Stickoxide (NOx) entstehen. Es gibt bereits Bemühungen, den Stickoxidanteil im Abgas zu reduzieren. Bei der sog. FLOX^{®}-Verbrennung oder flammenlosen Verbrennung, die vorzugsweise bei der Metallverhüttung oder in Wärmebehandlungsöfen eingesetzt wird, erfolgt eine starke Rezirkulation der Abgase in der Brennkammer und deren Vermischung mit der Verbrennungsluft. Hierdurch und durch die verzögerte Vermischung von Luft und Brenngas kann sich keine Flammenfront mehr ausbilden. Bei ausreichend hohen Temperaturen von mindestens ca. 800 °C oxidiert der Brennstoff im gesamten Brennraumvolumen. Dadurch stellen sich sehr homogene Temperaturen ein. Die Bildung von Stickoxiden, die vor allem an der Flammengrenze mit ihren hohen Spitzentemperaturen stattfindet, wird reduziert. Bei der Glasproduktion und dessen Verarbeitung besteht aufgrund oft erheblicher Stickoxidbildung oft Interesse an emissionsarmen Produktionsprozessen. Die Einführung der flammlosen Verbrennung stieß jedoch in der Vergangenheit auf Vorbehalte, von bewährten Produktionsverfahren abzuweichen, da viele Produktionsdetails auf empirischen Erfahrungen beruhen, die bei Veränderungen erst mühsam wieder erarbeitet werden müssten. Ähnliche Vorbehalte bestehen in der keramischen Industrie, wo gut eingeführte, hoch integrierte Prozesse vorhanden sind.

Bekannt ist auch ein unterstöchiometrischer Betrieb derart, dass Kohlenmonoxid (CO) erzeugt wird, was die Erzeugung von Stickoxiden verringert. Die Abgase müssen dann nachbehandelt werden, um das giftige Kohlenmonoxid abzubauen. Dies geschieht typischerweise durch Nachverbrennung im Bereich der keramischen Wärmespeichersteine der Wärmetauscher; die dabei entstehenden, sehr hohen Temperaturen innerhalb der Wärmetauscher können die Wärmeschutzmaterialien beschädigen und zu außerplanmäßigen Betriebsunterbrechungen aufgrund erforderlicher Reparaturen führen.

Im Übrigen ist herkömmlicherweise die Reduktion von Stickoxiden der Abgasnachbehandlung und -reinigung vorbehalten. Die Abgasreinigungseinrichtungen sind raum- und investitionsintensiv, ihre komplexen Prozesse bedingen hohe Betriebs- und Wartungskosten, und einige Prozesse in diesem Zusammenhang erfordern den Einsatz potentiell gefährlicher Chemikalien.

### Kurzfassung der Erfindung

Die Aufgabe der vorliegenden Erfindung besteht darin, die Nachteile des Stands der Technik zu vermeiden. Insbesondere besteht eine Aufgabe der Erfindung darin, einen Schmelzofen für Glas zu schaffen, bei dem auf einfache Art und Weise der Stickoxidanteil im Abgas verringert werden kann.

Wenigstens ein Teil der vorstehend genannten Aufgaben wird durch die Merkmale der unabhängigen Ansprüche gelöst. Bevorzugte Ausführungsformen und Weiterentwicklungen der Erfindung, die spezielle Teilaufgaben lösen, bilden den Gegenstand der Unteransprüche.

Nach einem Gesichtspunkt der vorliegenden Erfindung wird in einem Verfahren zum Schmelzen von Glas, wobei einem Schmelzofen Brennstoff und Oxidator über eine Brenneranordnung zugeführt werden, um innerhalb des Ofens zu verbrennen, zusätzlich zu dem über die Brenneranordnung zugeführten Brennstoff und Oxidator über eine oder mehrere Strömungsgasdüsen ein Strömungsgas mit einer Geschwindigkeit von wenigstens 50 m/s, vorzugsweise wenigstens 100 m/s besonders bevorzugt wenigstens 150 m/s, vorzugsweise mit einer Geschwindigkeit von höchstens 326 m/s (entspricht der Schallgeschwindigkeit in Sauerstoff), besonders bevorzugt höchstens 200 m/s, in den Ofen eingeführt.

Durch das Strömungsgas werden Verbrennungsprodukte innerhalb des Ofens mitgerissen und z. B. in die Verbrennungszone zurücktransportiert. Durch diese verbesserte Rezirkulation innerhalb des Ofens wird die Verbrennung verzögert, werden die Spitzentemperaturen verringert und die Erzeugung von thermischen Stickoxiden verringert. Neben diesem Strömungseffekt können durch Auswahl der Art des Strömungsgases weitere physikalische oder chemische Effekte erzielt werden.

Das Strömungsgas kann beispielsweise Kohlendioxid, Wasserdampf, ein Oxidationsmittel wie etwa Luft oder Sauerstoff, ein Brennstoff wie etwa Erdgas oder dergleichen, ein Inertstoff wie Argon und sogar Stickstoff oder dergleichen, oder eine Kombination mehrerer derselben sein oder aufweisen.

Die Strömungsgasdüsen können sich an einem oder mehreren der folgenden Orte befinden: einer Seitenwand, einer Stirnwand, einer Rückwand, einer Zwischenwand, einem Gewölbe des Ofens, wobei die Ausströmrichtung des Strömungsgases senkrecht oder in einem komplexen Winkel zu der jeweiligen Wand in den Ofen eingeführt wird.

Der Strömungsgasstrahl ist oder die Strömungsgasstrahlen sind vorzugsweise zu einer oder mehrerer der folgenden Zonen hin ausgerichtet: dem aus der Brenneranordnung austretenden Brennstoffstrom, dem aus der Brenneranordnung austretenden Oxidatorstrom, einer Zone zwischen dem Brennstoffstrom und dem Oxidatorstrom, der Verbrennungszone.

Die Strömungsgasdüsen sind vorzugsweise auf einer Abgasseite des Ofens angeordnet.

Das Strömungsgas wird vorzugsweise als dünner Strahl in den Ofen eingeführt. Die Dicke des Strahls ist implizit durch die Strömungsgeschwindigkeit und die Strömungsmenge des zuzuführenden Strömungsgases vorgegeben. Bei einer Strömung von 100 Nm³/h an Strömungsgas beträgt der Durchmesser eines einzigen im Querschnitt kreisförmigen Strahls beim Eintritt in den Ofen nicht mehr als etwa 27 mm. Dies entspricht einer Strömungsgeschwindigkeit von etwas 50 m/s. Bei Erhöhung der Strömungsgeschwindigkeit ist die Querschnittsfläche entsprechend zu verringern und bei Erhöhung der Strömungsmenge an zuzuführenden Strömungsgas ist die Querschnittsfläche entsprechend zu vergrößern. Der Bereich der Strömungsmenge des gesamten in den Ofen zugeführten Strömungsgases erstreckt sich von etwa 10 Nm³/h bis etwa 500 Nm³/h und vorzugsweise etwa 50 Nm³/h bis 250 Nm³/h und insbesondere vorzugsweise etwa 75 Nm³/h bis 150 Nm³/h. Das Strömungsgas kann auch mittels mehrerer Düsen eingedüst werden, wobei dann die Querschnittsfläche der einzelnen Strahlen beim Eintritt in den Ofen zusammen der oben erläuterten Querschnittsfläche eines einzelnen Strahls entspricht.

In einer Ausführungsform der Erfindung weist der Schmelzofen zwei Brenneranordnungen oder Gruppen von Brenneranordnungen auf, wobei dann, wenn über eine erste der Brenneranordnungen oder Gruppen von Brenneranordnungen Brennstoff und Oxidator zugeführt wird, die Abgase über den Oxidatorweg der zweiten der Brenneranordnungen oder Gruppen von Brenneranordnungen abgeführt werden, wobei die Betriebsrichtung der Brenneranordnungen in einem vorbestimmten Takt, vorzugsweise etwa alle 20 Minuten, umgekehrt wird, wobei jeder der Brenneranordnungen bzw. jeder der Gruppen von Brenneranordnungen im Oxidatorweg ein Wärmetauscher vorgeschaltet ist, der eine Anzahl von Wärmespeicherelementen aufweist, die je nach Betriebsweg von dem Oxidator oder dem Abgas um- oder durchströmt werden, und wobei die Strömungsgasdüsen in Paaren symmetrisch gegenüber einer vertikalen, longitudinalen Mittelebene des Ofens angeordnet sind, wobei die Längsrichtung des Ofens einer Abzugsrichtung des Schmelzgutes entspricht, und wobei im gleichen Takt, in welchem die Brenneranordnungen ihre Betriebsrichtung umkehren, die Paare von Strömungsgasdüsen im Wechsel betrieben werden.

In einer weiteren Ausführungsform weist oder weisen der Strömungsgasstrahl oder die Strömungsgasstrahlen jeweils einen Brennstoffstrahl und einen oder mehrere den Oxidatorstrahl im Querschnitt ringförmig umgebenden Oxidatorstrahl/-en auf, wobei der Oxidatorstrahl meistens eine höhere Eintrittsgeschwindigkeit als der bzw. die Brennstoffstrahl/- en aufweist, wobei wenigstens der Oxidatorstrahl eine Geschwindigkeit von wenigstens 50 m/s, vorzugsweise wenigstens 100 m/s, besonders bevorzugt wenigstens 150 m/s aufweist.

Ein zweiter Gesichtspunkt betrifft eine Vorrichtung zur Durchführung des Verfahrens.

Weitere Gesichtspunkte, Vorteile und Merkmale der vorliegenden Erfindung werden aus der nachstehenden Beschreibung und den beigefügten Zeichnungen einer besonders bevorzugten Ausführungsform der Erfindung ersichtlich werden.

### Kurzbeschreibung der Zeichnungen

Fig. 1 ist eine perspektivische Ansicht einer Glasschmelzanlage mit U-Flammenbrennerwanne nach einer ersten Ausführungsform der vorliegenden Erfindung;
Fig. 2 ist eine Längsschnittansicht einer Brenneranordnung, die in einer Glasschmelzanlage nach der Erfindung Verwendung findet;
Fig. 3A ist eine schematisierte Draufsicht einer oberhalb einer Schmelzgutoberfläche horizontal geschnittenen Anordnung eines Schmelzofens mit Wärmetauschern der Anlage von Fig. 1 zur Verdeutlichung eines Strömungsverlaufs von Gasströmen innerhalb des Ofens;
Fig. 3B ist eine entlang einer Linie IIIB-IIIB geschnittene Seitenansicht der Anordnung von Fig. 3A zur Verdeutlichung eines Strömungsverlaufs innerhalb der Schmelze;
Fign. 4A, 4B bis 8A, 8B sind schematische Ansichten einer Anordnung eines Schmelzofens mit U-Flammenbrennerwanne und Wärmetauschern zur Verdeutlichung möglicher Abwandlungen der ersten Ausführungsform, wobei Fig. 4A bis 8A jeweils eine horizontal geschnittene Draufsicht, Fig. 4B bis 8B jeweils eine entlang einer Linie IVB-IVB bis VIIIB-VIIIB in Fig. 4A bis Fig. 8A geschnittene Seitenansicht der Anordnung ist;
Fig. 9 ist eine perspektivische Ansicht einer Glasschmelzanlage mit Querbrennerwanne nach einer zweiten Ausführungsform der vorliegenden Erfindung; und
Fig. 10 ist eine schematisierte Draufsicht einer oberhalb einer Schmelzgutoberfläche horizontal geschnittenen Anordnung eines Schmelzofens mit Querbrennerwanne zur Verdeutlichung möglicher Abwandlungen der zweiten Ausführungsform.

### Ausführliche Beschreibung bevorzugter Ausführungsformen

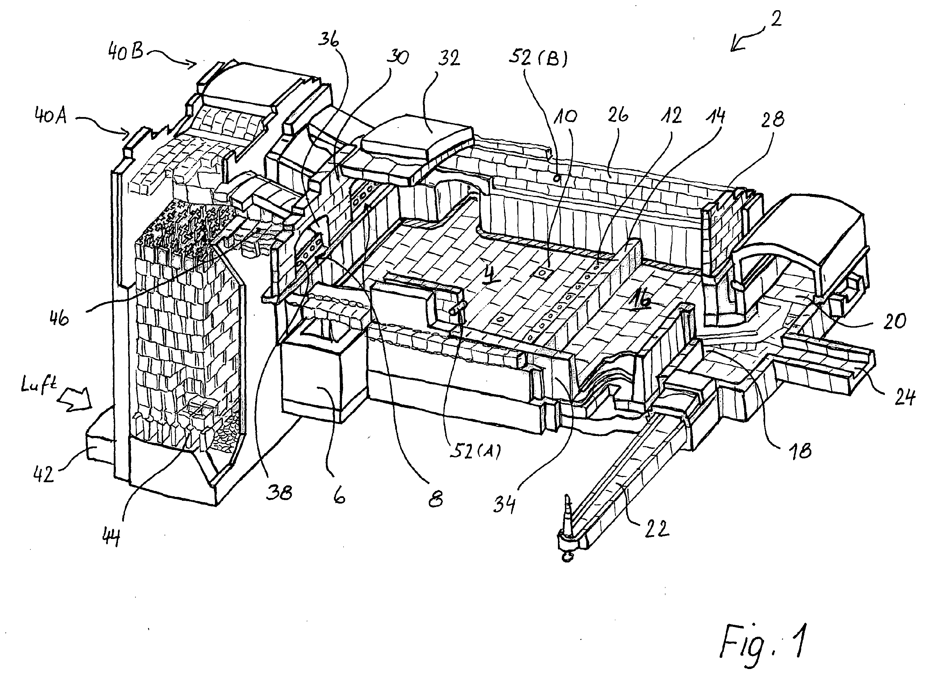

Eine besonders bevorzugte Ausführungsform der Erfindung wird nachstehend unter Bezugnahme auf die begleitenden Zeichnungen erläutert werden. Dabei zeigt Fig. 1 eine perspektivische Ansicht einer Glasschmelzanlage mit U-Flammenbrennerwanne nach einer ersten Ausführungsform der vorliegenden Erfindung.

Eine Glasschmelzanlage 2 weist eine Schmelzwanne 4 mit Einlegevorbau 6 (zwei mal) auf. Über den Einlegevorbau 6 wird die Schmelzwanne 4 mit Rohstoff beschickt. Über zwei Brenner-Ports 8 wird die Schmelzwanne 4 beheizt. Im Boden der Schmelzwanne sind mehrere Elektrodenöffnungen (engl. "Electrode Holes") 10 für Schmelzelektroden vorgesehen, die eine zusätzliche elektrische Beheizung des Schmelzgutes ermöglichen. Ferner ist im Boden der Schmelzwanne eine Reihe von Sprudlerdüsen (engl. "Bubbler-Line") 12 vorgesehen. Über die Sprudlerdüsen 12 kann ein Gas in die Schmelze eingeleitet werden, um die Konvektion innerhalb der Schmelze zusätzlich anzuregen. Durch eine Wand 14, deren Oberkante unterhalb der Oberfläche des Schmelzgutes liegt, ist ein Läuterbereich 16 abgetrennt. Von dem Läuterbereich 16 führt ein Durchlass 18 in eine Arbeitswanne 20. Dort erfolgt eine weitere Homogenisierung und Beruhigung der Schmelze, um dann über die sogenannten Feeder 22, 24 der Formgebung zugeführt zu werden.

Die Elektrodenöffnungen 10, Sprudlerdüsen 12 und die Wand 14 sind nicht immer notwendigerweise in einer Glasschmelzanlage 2 vorzusehen. In der Regel weist eine Glasschmelzanlage lediglich ein oder zwei dieser drei Elemente auf.

Die Schmelzwanne 4 mit den Einlegevorbauten 6, dem Läuterbereich 16 und den Brenner-Ports 8 bildet den eigentlichen Schmelzofen der Anlage. Er ist ein Gebäude mit zwei Seitenwänden 26, einer Rückwand 28, einer Stirnwand 30 und einem (Dach-)Gewölbe 32. Dabei befinden sich die Brenner-Ports 8 in der Stirnwand, die Einlegevorbauten 6 an den Seitenwänden 26 nahe der Stirnwand 30, und der Durchlass 18 in der Rückwand 28. Der Boden, die Wände 26, 28, 30 und das Gewölbe 32 sind mit einer feuerfesten Auskleidung 34 versehen. Das Material der Auskleidung 34 ist an das lokale Temperaturprofil innerhalb des Ofens angepasst. So finden in den Bereichen, in denen die Wände mit Schmelzgut in Berührung kommen, andere Materialien Anwendung als in Bereichen, in denen die Wände mit heißen Gasen in Berührung kommen. Auch die Wand 14 und die Wandungen der Arbeitswanne 20 und der Feeder 22, 24 bestehen aus derartigem feuerfestem Material. Die Auswahl der Materialien erfolgt nach wohlbekannten Gesichtspunkten, wie sie in der Lehrliteratur wie etwa Reinhard Conradt, Werkstoffverarbeitung Glas, RWTH Aachen, Juli 2008 diskutiert werden.

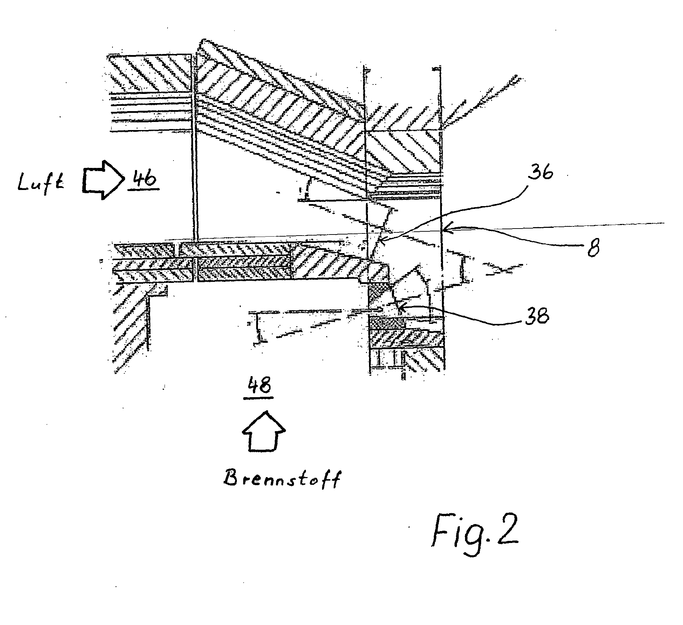

Jeder Brenner-Port 8 ist wie eine in der Stirnwand 30 eingelassene Toröffnung gestaltet. Hier münden jeweils ein im Querschnitt annähernd rechteckiger Luftkanal 36 und vier darunter angeordnete, im Querschnitt annähernd runde Brennstoffdüsen 38, wie in der Darstellung in Fig. 2 deutlicher sichtbar. Fig. 2 ist eine Längsschnittansicht durch eine Brenneranordnung, die in der Glasschmelzanlage dieser Ausführungsform zum Einsatz kommt. Über eine Luftzuführung 46 wird Luft dem sich zunächst deutlich verjüngenden, weiter stromabwärts nach einer Knickstelle nahezu querschnittskonstant verlaufenden Luftkanal 36 zugeführt. An seiner Mündung weist der Luftkanal 36 eine schräg nach unten gerichtete Strömungsrichtung auf. Über eine Brennstoffzuführung 48 wird Brennstoff der sich im Querschnitt erweiternden Brennstoffdüse 38 zugeführt. Die Strömungsrichtung in der Brennstoffdüse 38 ist schräg nach oben gerichtet, sodass die Luftströmung und die Brennstoffströmung unter einem Winkel zusammentreffen.

Zurück zu Fig. 1. Dem Luftkanal 46 (der Brennstoffkanal 48 ist in Fig. 1 nicht dargestellt) jedes Brenner-Ports 8 ist ein Wärmetauscher 40 (zur Unterscheidung der Seiten in der Figur mit 40A und 40B bezeichnet) vorgeschaltet, an dessen unterem Ende jeweils eine Luftleitung 42 mündet. Innerhalb des Wärmetauschers 40 ist eine Anordnung von Wärmespeichersteinen 44 so vorgesehen, dass die über die Luftleitung 42 zugeführte Luft über eine große Oberfläche der Wärmespeichersteine 44 streicht, bevor sie den Wärmetauscher 40 über den Luftkanal 46 verlässt.

Im Betrieb der Anlage 2 ist stets nur ein Brenner-Port 8 als Brenner in Betrieb, während der andere Brenner-Port 8 im Regenerativbetrieb arbeitet.

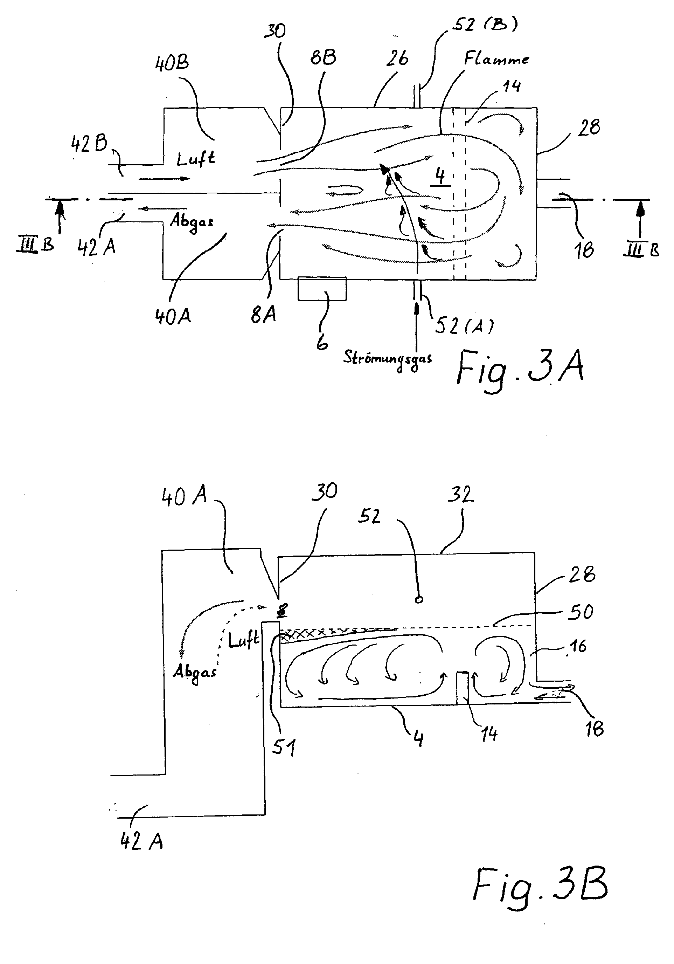

Dieser Vorgang ist in Fig. 3A genauer verdeutlicht. Fig. 3A ist eine schematisierte Draufsicht einer oberhalb einer Schmelzgutoberfläche horizontal geschnittenen Anordnung eines Schmelzofens mit Wärmetauschern der Anlage von Fig. 1 mit einer Darstellung eines Strömungsverlaufs der Gase innerhalb des Ofens. Dem im Brennerbetrieb arbeitenden Brenner-Port 8B wird Luft und Brennstoff zugeführt, und es bildet sich eine Flamme im Ofenraum. Dabei wird die Luft über den Wärmetauscher 40B geführt (die Brennstoffzufuhr ist in der Figur nicht näher dargestellt). Die Verbrennungsgase beschreiben innerhalb des Ofens einen U-förmigen Strömungsweg, verlassen den Ofenraum als Abgas über den Brenner-Port 8A, werden über den Wärmetauscher 40A geführt und über die Luftleitung 42A abgeleitet. In dem Wärmetauscher 40A erwärmen die typischerweise ca. 1500 °C heißen Abgase die Wärmespeichersteine 44 (in Fig. 3A nicht näher dargestellt). Nach einer gewissen Zeit (typischerweise etwa 20 Minuten) wird die Strömungsrichtung umgekehrt. D. h., die Luft- und Brennstoffzufuhr des Brenner-Ports 8B wird abgestellt; stattdessen werden nun dem Brenner-Port 8A Luft und Brennstoff zugeführt, und die Abgase verlassen den Ofen über den Brenner-Port 8B. Die zuvor von den heißen Abgasen erwärmten Wärmespeichersteine 44 in dem Wärmetauscher 40A sorgen nun für eine Vorwärmung der zugeführten Luft auf typischerweise ca. 1200 °C, wobei die Wärmespeichersteine 44 ihre Wärme abgeben und entsprechend abkühlen. Nach wiederum etwa 20 Minuten wird die Strömungsrichtung wieder umgekehrt, u. s. w. Dieser regenerative Wechselbetrieb (Siemens-Martin-Verfahren) ermöglicht einen wirtschaftlichen und energieeffizienten Prozess.

Fig. 3B ist eine entlang einer Linie IIIB-IIIB geschnittene Seitenansicht der Anordnung von Fig. 3A und verdeutlicht den typischen Strömungsverlauf in der Schmelze 50 (sog. Doppelwalzenströmung). Im Bereich der Schmelzwanne 4 bildet sich unter der Wirkung der Flamme und ggf. der Heizelektroden 10 (hier nicht näher dargestellt) eine Konvektionsströmung aus. An einer bestimmten Stelle innerhalb der Schmelze 50 ist die Temperatur am größten (sog. "hot spot"). Dort ist die Strömung aufwärts gerichtet, und von dort aus strömt die Schmelze an der Oberfläche zu den Wänden, sinkt dort ab und strömt am Boden zu dem Hot Spot zurück. Durch den Einsatz der Trennwand 14, die sich an der Stelle des Hot Spot quer durch die Wanne 4 erstreckt, wird diese Konvektionsströmung unterstützt, stabilisiert und homogenisiert. Insbesondere bildet sich im Bereich vor der Trennwand 14 eine zu dem Einlegevorbau 6 hin gerichteten Oberflächenströmung und eine zu der Trennwand 14 hin gerichtete Bodenströmung, während im Läuterbereich die Strömungsrichtungen entgegengesetzt sind. Im Bereich der Stirnwand 30 wird das kalte Schmelzgut 51 mit nach unten mitgerissen, vermischt sich mit Schmelze 50 und schmilzt selbst auf. Der Einsatz der Heizelektroden 10 (hier nicht näher dargestellt) unterstützt den Schmelzprozess, und die Sprudlerdüsen 12 (hier ebenfalls nicht näher dargestellt) unterstützen die Konvektion im Bereich der Trennwand 14. Über den Durchlass 18 in der Rückwand 28 wird heiße Schmelze in die Arbeitswanne 20 (hier nicht näher dargestellt) abgezogen, wobei auch eine gewisse Rückströmung kühlerer Schmelze im Bodenbereich nicht ausgeschlossen ist.

Gemäß der Darstellung in Fign. 1, 3A, 3B ist jeder Seitenwand 26 jeweils eine Strömungsgasdüse 52 angeordnet, deren Austrittsrichtung im Wesentlichen senkrecht zur Seitenwand 26 steht. Über eine nicht näher dargestellte Strömungsgasbereitstellungseinrichtung ist den Strömungsgasdüsen 52 für jede Seite (A oder B) getrennt steuerbar ein Strömungsgas zuführbar. Die Strömungsgasbereitstellungseinrichtung kann Vorratsbehälter, Leitungen, Armaturen und Steuerelemente aufweisen. Das Strömungsgas wird so zugeführt, dass es mit einer hohen Geschwindigkeit in den Ofen eintritt. Die Geschwindigkeit beträgt wenigstens 40 m/s. Das Strömungsgas wird dabei derjenigen Strömungsgasdüse 52(A) oder 52(B) zugeführt, die sich auf der Abgasseite des Ofens befindet. D. h., wenn sich der Brenner-Port 8A im Brennerbetrieb befindet, wird das Strömungsgas der Strömungsgasdüse 52(B) zugeführt und die Strömungsgasdüse 52(A) inaktiviert, und wenn sich der Brenner-Port 8B im Brennerbetrieb befindet, wird das Strömungsgas der Strömungsgasdüse 52(A) zugeführt und die Strömungsgasdüse 52(B) inaktiviert.

Das zugeführte Strömungsgas ist aus einer Vielzahl von Stoffen auswählbar, so z. B. Kohlendioxid, Wasserdampf, ein Oxidationsmittel wie etwa Luft oder Sauerstoff, ein Brennstoff wie etwa Erdgas oder dergleichen oder ein Inertstoff wie etwa Argon oder sogar Stickstoff oder dergleichen. Es kann auch eine Kombination mehrerer Stoffe sein.

Durch das Einführen des Strömungsgases können mehrere Wirkungen erzielt werden. Durch die Strömung des zusätzlichen Gases nimmt das Strömungsgas Abgas mit und führt es dem Flammenbereich zu (Strömungseffekt). Hierdurch wird die Verbrennung verzögert und die Maximaltemperatur der Flamme herabgesetzt. Der Flammbereich wird aufgeweitet. Das Strömungsgas kann etwa die zwanzig- bis hundertfache Menge an Abgas mitnehmen und der Flammenzone zuführen.

Dabei ist es von Vorteil, wenn das Strömungsgas als dünner Strahl zugeführt wird, da dieser sehr viel Abgas ansaugt und dadurch stark abgebremst wird. Hierdurch wir vermieden, dass die gegenüberliegende Wand nicht getroffen wird.

Zusätzlich können je nach Art des Strömungsgases verschiedene physikalische und/oder chemische Effekte auftreten.

Bei Verwendung eines z. B. dreiatomigen Gases wie etwa Kohlendioxid (CO₂) oder Wasserdampf (H₂O) können die Gase die aufgenommene Wärme abstrahlen, da dreiatomige Gase gute Wärmestrahler sind. Hierdurch wird die Wärme gleichmäßig im Ofen verteilt, was sowohl die Verbrennung fördert als auch den gleichmäßigen Schmelzprozess unterstützt.

Bei Verwendung eines Oxidationsmittels wie etwa Luft oder reinem Sauerstoff kann die Ausbreitung der Flammenzone gezielt gesteuert werden, da das Oxidationsmittel den Brennvorgang beschleunigt. Die am Brenner zugeführte Luft ist dann entsprechend zu reduzieren, um das gewünschte stöchiometrische Verhältnis im Ofen beizubehalten. Bei Zuführung von Sauerstoff als Strömungsgas hat dies den weiteren Vorteil, dass im Ofen insgesamt weniger Luft und damit weniger Stickstoff zugeführt wird, was zusätzlich die Erzeugung von Stickoxiden verringert.

Andererseits kann auch Brennstoff als Strömungsgas verwendet werden, wenn dieser unter ausreichendem Druck (zumindest 500 mbar(ü)) vorhanden ist.

Bei Verwendung von beispielsweise Methan als Strömungsgas kann eine Anreicherung von Kohlenmonoxid (CO) in der Region der Stickoxid-Erzeugung bewirkt werden und die Menge des erzeugten NOx verringert werden.

Auch die Verwendung von Stickstoff als Strömungsgas ist möglich, da der oben beschriebene Strömungseffekt eine weit stärkere Reduzierung von Stickoxiden bewirkt als die zusätzliche Menge an Stickstoff hervorruft.

Wie bereits erwähnt, ist zur Verwirklichung des o. g. Strömungseffekts eine Ausströmungsgeschwindigkeit des Strömungsgases von typischerweise mindestens 50 m/s erforderlich. Je nach Randbedingungen kann auch eine Mindest-Ausströmgeschwindigkeit des Strömungsgases von 100 m/s bis 150 m/s oder darüber optimal sein.

Zu hohe Geschwindigkeiten des Strömungsgases sind jedoch ebenfalls nicht erwünscht, da es sonst zu einer Aufwirbelung von Staub und Rohmaterial sowie einer Störung der Flamme kommen könnte. Auch könnten Korrosion und Erosion an der Ofenwandung begünstigt werden, wenn das Strömungsgas die gegenüberliegende Seite des Ofens erreicht. Je nach Größe des Ofens sollte die Maximal-Ausströmgeschwindigkeit des Strömungsgases typischerweise zwischen 200 m/s und 300 m/s liegen.

Die zuvor beschriebene Ausführungsform ist zum Zwecke der Erläuterung des Wirkprinzips sehr einfach gehalten. Zur Optimierung der Prozessführung sind vielfältige Abwandlungen denkbar.

Bei der vorstehenden Ausführungsform ist nur eine einzige Strömungsgasdüse 52 in jeder Seitenwand 26 vorgesehen, die senkrecht zur jeweiligen Seitenwand 26 auf der Abgasseite des Ofens ein Strömungsgas entlässt. Die Anzahl, Lage und Ausströmrichtung der Strömungsgasdüsen 52 erlaubt eine Vielzahl von Optimierungsmöglichkeiten.

Durch Verwendung einer Mehrzahl von Strömungsgasdüsen, typischerweise 2 bis 12 oder noch mehr, können die auftretenden Effekte gleichmäßiger, zielgerichteter und insgesamt intensiver erzielt werden. Die Anzahl der eingesetzten Strömungsgasdüsen 52a kann in Abhängigkeit von der Größe des Ofens und der Zielzone optimiert werden, um eine ausreichende Durchmischung und Verdünnung sicherzustellen. Dabei können die Strömungsgasdüsen in den Seitenwänden 26, der Stirnwand 30, der Rückwand 28 oder dem Gewölbe 32 angeordnet sein.

Der Ausströmwinkel der Strömungsgasdüsen 52 kann in einem komplexen Winkel zu der Stirnwand 30 geneigt sein, typischerweise in einem Bereich von ±45° in vertikaler und/oder horizontaler Richtung (±45° in Längs- und/oder Querrichtung im Fall der Anordnung im Gewölbe 32), sodass die Zielzone unter Berücksichtung einer Verwehung durch das Abgas möglichst wirksam getroffen wird. Ein schräges Einströmen des Strömungsgases bedeutet, dass das Strömungsgas eine längere Strecke durch das Abgas hindurch zurücklegt, das sich in dem der Wandung benachbarten Bereich befindet. Hierdurch kann die Mitnahme von Abgas gesteigert werden. Da das Strömungsgas in der Ofenatmosphäre abgebremst wird, kann eine zu lange durch das Abgas führende Strecke dazu führen, dass der vom Strömungsgas verursachte Gasstrom sein Ziel nicht erreicht. Es ist daher der Strömungswinkel mit der Einströmgeschwindigkeit und Strahldurchmesser und umgekehrt abzustimmen.

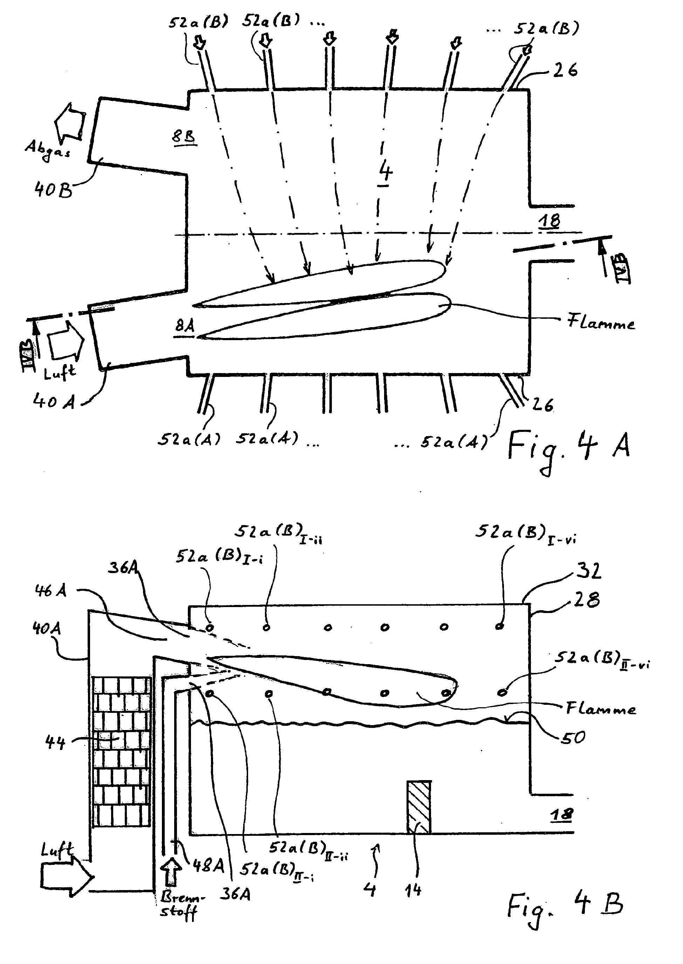

Fig. 4A ist eine schematisierte Draufsicht einer horizontal geschnittenen Anordnung eines Schmelzofens mit U-Flammenbrennerwanne und Wärmetauschern zur Verdeutlichung einer konstruktiven Abwandlungen der ersten Ausführungsform, und Fig. 4B ist eine entlang einer Linie IVB-IVB in Fig. 4A geschnittene Seitenansicht der Anordnung. Die Situation ist so dargestellt, dass der Brenner-Port 8A und der Wärmetauscher 40A im Brennerbetrieb arbeiten, während der Brenner-Port 8B und der Wärmetauscher 40B im Regenerativbetrieb arbeiten. D. h., dem Brenner-Port 8A wird vorgewärmte Luft über den Wärmetauscher 40A, den Luftkanal 46A und die Luftöffnung 36A sowie Brennstoff über die Brennstoff-Zuführung 48A und die Brennstoffdüse 36A zugeführt, Luft und Brennstoff verbrennen innerhalb der Flammenwanne 4, wobei sich der Gasstrom an der Rückwand 28 umkehrt und das Abgas die Flammenwanne über den Brenner-Port 8B und den Wärmetauscher 40B verlässt, wobei letzterer durch das heiße Abgas thermisch aufgeladen wird. Was also nachstehend speziell für eine Seite A oder B beschrieben wird, gilt bei Strömungsumkehr für die andere Seite B bzw. A.

Gemäß der Darstellung in Fig. 4A sind in jeder Seitenwand 26 der Flammenbrennerwanne 4 eine Mehrzahl von Strömungsgasdüsen 52a (52a(A) bzw. 52a(B) je nach Seite des Ofens entsprechend der Lage der Wärmetauschern 40A bzw. 40B) vorgesehen. Die Strömungsgasdüsen 52a sind in zwei horizontalen Reihen über die Länge der Seitenwand 26 verteilt, wie in Fig. 4B dargestellt. Im Einzelnen sind in der Seitenwand 26 der Seite des Wärmetauschers 40B in einer oberen Reihe (I) sechs Strömungsgasdüsen 52a(B)_{I-i} bis 52a(B)_{I-vi} vorgesehen und sind in einer unteren Reihe (II) sechs Strömungsgasdüsen 52a(B)_{II-i} bis 52a(B)_{II-vi} vorgesehen. Eine entsprechende Anordnung gilt auch für die Seitenwand 26 der Seite des Wärmetauschers 40B.

Die Strömungsgasdüsen 52a sind in einem Bereich von typischerweise etwa ±45° in horizontaler und vertikaler Richtung gegenüber der Seitenwand 26 geneigt (die horizontale Neigung ist in der Figur nicht sichtbar). Die Neigung der Strömungsgasdüsen 52a ist so gewählt, dass der Strömungsgasstrahl von der Abgasseite aus (also von der Seite des Brenner-Ports 8B aus, wenn der Brenner-Port 8A im Brennerbetrieb arbeitet, und umgekehrt) unter Berücksichtigung von Verwehungseffekten durch den Abgasstrom zuverlässig zu der Verbrennungszone (der Bereich, in der Figur mit "Flamme" bezeichnet) hin gerichtet ist. Die Wege der Strömungsgasstrahlen von den in der dargestellten Situation aktiven Strömungsgasdüsen 52a aus sind in der Figur mit gepfeilten, strichpunktierten dünnen Linien näherungsweise dargestellt.

Das Strömungsgas wird hochkinetisch, d. h., mit hoher Geschwindigkeit in den Ofenraum eingedüst. Als geeignete Mindestgeschwindigkeit hat sich ein Bereich von 100 m/s bis 150 m/s herausgestellt. Je nach Größe des Ofens und des zurückzulegenden Weges kann auch eine Mindestgeschwindigkeit von bis hinab zu 50 m/s ausreichend sein. Dagegen kann insbesondere an Stellen, an denen der Gasstrom im Ofen dem Strömungsgas entgegengesetzt ist, wie etwa in der Nähe der Rückwand 28, eine höhere Mindestgeschwindigkeit von bis zu 250 m/s oder darüber erforderlich sein. In jedem Fall ist die Ausströmgeschwindigkeit des Strömungsgases sorgfältig zu kontrollieren, damit Beschädigungen durch Erosion an der Feuerfestverkleidung vermieden werden.

Durch das eingedüste Strömungsgas werden etwa Kohlendioxid (CO₂), Wasserdampf (H₂O) und Stickstoff (N₂) im Abgas mitgerissen und in die Verbrennungszone getragen und damit sowie mit dem Strömungsgas selbst die Verbrennungsgase verdünnt. Hierdurch werden Spitzentemperaturen innerhalb der Flamme reduziert, sodass die Produktion thermischer Stickoxide unterdrückt oder wenigstens signifikant eingedämmt werden kann. Die Anzahl der Strömungsgasdüsen 52a kann im Hinblick auf die Größe des Ofens bzw. der Verbrennungszone und den abzudeckenden Weg in Relation zu dem gewünschten Rezirkulationsgrad abgeändert und optimiert werden.

Anstelle oder zusätzlich zu der Abgasseite kann über die Strömungsgasdüsen 52a auch Strömungsgas von der Flammenseite aus in die Verbrennungszone eingedüst werden. Mitnahmeeffekte von Abgas in die Verbrennungszone treten dabei gegenüber Verdünnungseffekten und einer Beeinflussung der Verbrennungsprozesse durch das Strömungsgas zurück. Gegebenenfalls wird von der Flammenseite aus ein anderes Strömungsgas eingedüst als von der Abgasseite aus. Hierzu kann die Gaszufuhr zu den Strömungsgasdüsen 52a umschaltbar sein. Auch kann das Strömungsgas von der Abgasseite aus mit höherer Geschwindigkeit eingedüst werden als von der Flammenseite aus. Es ist auch möglich, für die flammenseitigen Eindüsung von Strömungsgas zusätzliche Strömungsgasdüsen vorzusehen, die gegebenenfalls auch unter einem anderen Winkel zur jeweiligen Wand eingerichtet sind, um die Zielzone zuverlässig zu treffen.

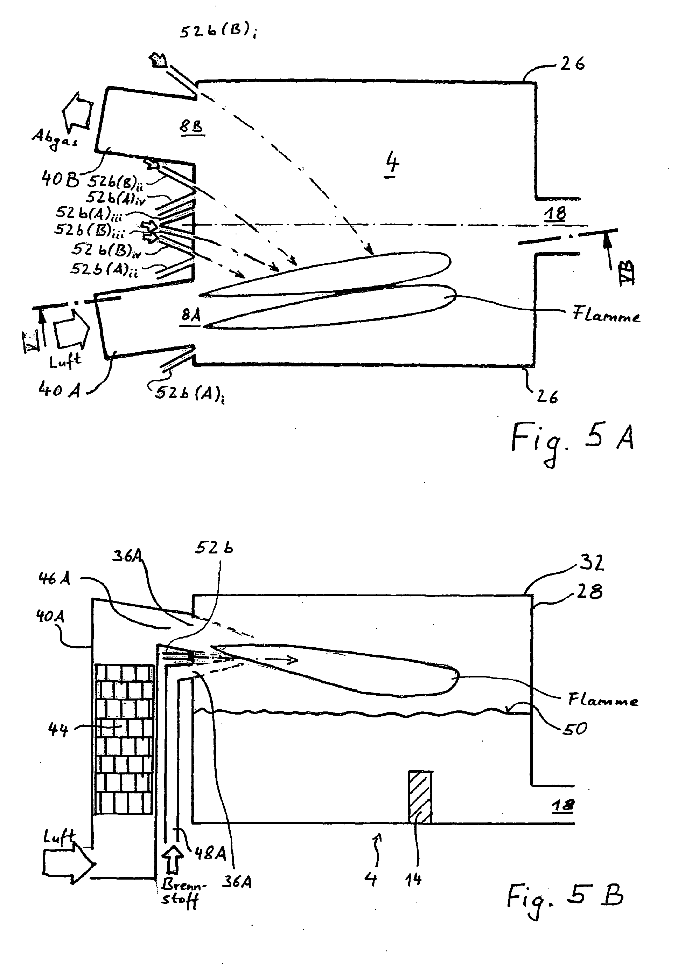

Fig. 5A ist eine schematisierte Draufsicht einer horizontal geschnittenen Anordnung eines Schmelzofens mit U-Flammenbrennerwanne und Wärmetauschern zur Verdeutlichung einer konstruktiven Abwandlungen der ersten Ausführungsform, und Fig. 5B ist eine entlang einer Linie VB-VB in Fig. 5A geschnittene Seitenansicht der Anordnung. Die Situation ist so dargestellt, dass der Brenner-Port 8A und der Wärmetauscher 40A im Brennerbetrieb arbeiten, während der Brenner-Port 8B und der Wärmetauscher 40B im Regenerativbetrieb arbeiten. D. h., dem Brenner-Port 8A wird vorgewärmte Luft über den Wärmetauscher 40A, den Luftkanal 46A und die Luftöffnung 36A sowie Brennstoff über die Brennstoff-Zuführung 48A und die Brennstoffdüse 36A zugeführt, Luft und Brennstoff verbrennen innerhalb der Flammenwanne 4, wobei sich der Gasstrom an der Rückwand 28 umkehrt und das Abgas die Flammenwanne über den Brenner-Port 8B und den Wärmetauscher 40B verlässt, wobei letzterer durch das heiße Abgas thermisch aufgeladen wird. Was also nachstehend speziell für eine Seite A oder B beschrieben wird, gilt bei Strömungsumkehr für die andere Seite B bzw. A.

Gemäß der Darstellung in Fign. 5A und 5B sind in der Stirnwand 30 der Flammenbrennerwanne 4 eine Mehrzahl von Strömungsgasdüsen 52b (52b(A) bzw. 52b(B) je nach Seite) vorgesehen.

Die Strömungsgasdüsen 52b sind in horizontaler Richtung deutlich (um 45°) gegenüber der Stirnwand 30 geneigt. Dabei ist eine Gruppe der Strömungsgasdüsen 52b(A)ᵢ bis 52b(A)ᵢᵥ so ausgerichtet, dass ihre Ausströmrichtung zur Seite des Brenner-Ports 8B weist, während eine zweite Gruppe der Strömungsgasdüsen 52b(B)ᵢ bis 52b(B)ᵢᵥ so ausgerichtet, dass ihre Ausströmrichtung zur Seite des Brenner-Ports 8A weist.

Die Neigung der Strömungsgasdüsen 52b ist so gewählt, dass der Strömungsgasstrahl von der Abgasseite aus (also von der Seite des Brenner-Ports 8B aus, wenn der Brenner-Port 8A im Brennerbetrieb arbeitet, und umgekehrt) unter Berücksichtigung von Verwehungseffekten durch den Abgasstrom zuverlässig zu der Verbrennungszone (der Bereich, in der Figur mit "Flamme" bezeichnet) hin gerichtet ist. Dabei ist anzumerken, dass sich ein Teil der zur "Abgasseite" gehörenden Strömungsgasdüsen tatsächlich auf der Flammenseite befindet; diese Strömungsgasdüsen 52b(B)ᵢᵢᵢ und 52b(B)ᵢᵥ dienen weniger dem Mitreißen von Abgas als der Unterstützung und Lenkung der von den Strömungsgasdüsen 52b(B)ᵢ und 52b(B)ᵢᵢ her kommenden Strömungsgasstrahlen, da letztere gegen die Strömungsrichtung des Abgasstroms gerichtet sind und somit stark abgebremst bzw. umgelenkt werden. Die Wege der Strömungsgasstrahlen von den in der dargestellten Situation aktiven Strömungsgasdüsen 52b aus sind in der Figur mit gepfeilten, strichpunktierten dünnen Linien näherungsweise dargestellt.

Eine Neigung der Strömungsgasdüsen 52b in vertikaler Richtung ist hier nicht oder allenfalls in geringem Maß vorgesehen, kann aber dann erforderlich sein, wenn, wie in der Abwandlung nach Fig. 4B, mehrere Reihen von Strömungsgasdüsen 52b vorgesehen sind. Insbesondere können, obschon in der Figuren nicht näher dargestellt, oberhalb und unterhalb der Brenner-Ports 8A und 8B ebenfalls Strömungsgasdüsen 52b vorgesehen sein, um auch in diesen Ebenen Abgas in die Verbrennungszone mitzureißen.

Das Strömungsgas wird hochkinetisch, d. h., mit hoher Geschwindigkeit in den Ofenraum eingedüst. Als geeignete Mindestgeschwindigkeit hat sich ein Bereich von 100 m/s bis 150 m/s herausgestellt. Je nach Größe des Ofens und des zurückzulegenden Weges kann auch eine Mindestgeschwindigkeit von bis hinab zu 50 m/s ausreichend sein, insbesondere für die Strömungsgasdüsen 52b(B)ᵢᵢᵢ und 52b(B)ᵢᵥ, die im Wesentlichen nur eine unterstützende Aufgabe haben. Dagegen kann, da insbesondere auf der Abgasseite der Abgasstrom im Ofen dem von der Stirnwand her eingedüsten Strömungsgas entgegengesetzt ist, wie etwa im Fall der Strömungsgasdüsen 52b(B)ᵢ und 52b(B)ᵢᵢ, für diese Düsen eine höhere Mindestgeschwindigkeit von bis zu 250 m/s oder darüber erforderlich sein. In jedem Fall ist die Ausströmgeschwindigkeit des Strömungsgases sorgfältig zu kontrollieren, damit Beschädigungen durch Erosion an der Feuerfestverkleidung vermieden werden.

Durch das eingedüste Strömungsgas werden etwa Kohlendioxid (CO₂), Wasserdampf (H₂O) und Stickstoff (N₂) im Abgas mitgerissen und in die Verbrennungszone getragen und damit sowie mit dem Strömungsgas selbst die Verbrennungsgase verdünnt. Hierdurch werden Spitzentemperaturen innerhalb der Flamme reduziert, sodass die Produktion thermischer Stickoxide unterdrückt oder wenigstens signifikant eingedämmt werden kann. Die Anzahl der Strömungsgasdüsen 52b kann im Hinblick auf die Größe des Ofens bzw. der Verbrennungszone und den abzudeckenden Weg in Relation zu dem gewünschten Rezirkulationsgrad abgeändert und optimiert werden.

Anstelle oder zusätzlich zu der Abgasseite kann über die Strömungsgasdüsen 52b auch Strömungsgas von der Flammenseite aus in die Verbrennungszone eingedüst werden. In der dargestellten Situation kann z. B. die äußere Strömungsgasdüse 52b(A)ᵢ hierfür genutzt werden. Mitnahmeeffekte von Abgas in die Verbrennungszone treten dabei gegenüber Verdünnungseffekten und einer Beeinflussung der Verbrennungsprozesse durch das Strömungsgas zurück. Gegebenenfalls wird von der Flammenseite aus ein anderes Strömungsgas eingedüst als von der Abgasseite aus. Hierzu kann die Gaszufuhr zu den Strömungsgasdüsen 52b umschaltbar sein. Auch kann das Strömungsgas von der Abgasseite aus mit höherer Geschwindigkeit eingedüst werden als von der Flammenseite aus. Es ist auch möglich, für die flammenseitigen Eindüsung von Strömungsgas zusätzliche Strömungsgasdüsen vorzusehen, die gegebenenfalls auch unter einem anderen Winkel zur Stirnwand 30 eingerichtet sind, um die Zielzone zuverlässig zu treffen.

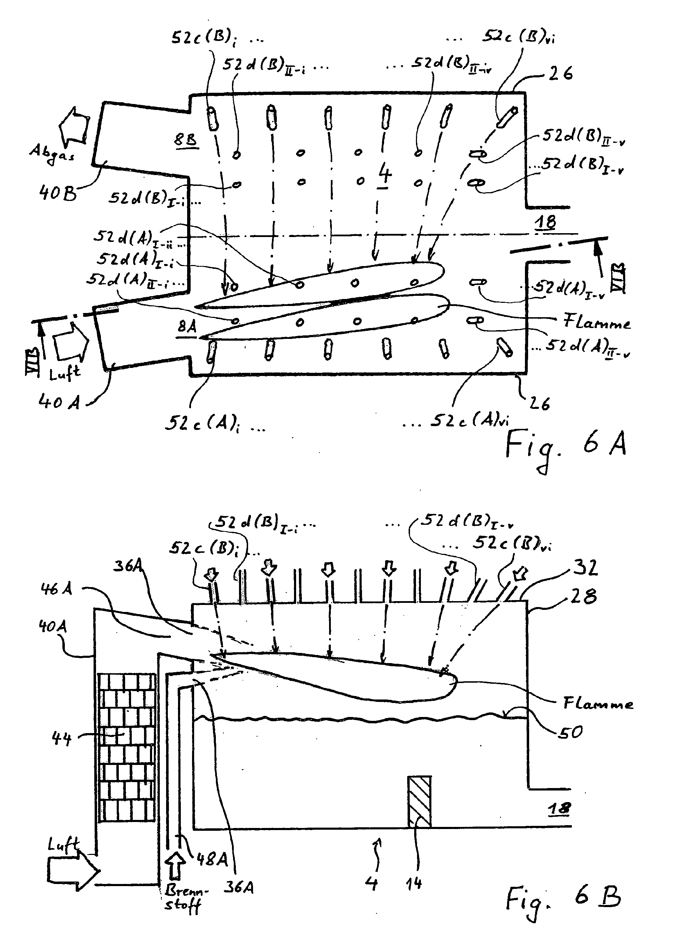

Fig. 6A ist eine schematisierte Draufsicht einer horizontal geschnittenen Anordnung eines Schmelzofens mit U-Flammenbrennerwanne und Wärmetauschern zur Verdeutlichung einer konstruktiven Abwandlungen der ersten Ausführungsform, und Fig. 6B ist eine entlang einer Linie VIB-VIB in Fig. 6A geschnittene Seitenansicht der Anordnung. Die Situation ist so dargestellt, dass der Brenner-Port 8A und der Wärmetauscher 40A im Brennerbetrieb arbeiten, während der Brenner-Port 8B und der Wärmetauscher 40B im Regenerativbetrieb arbeiten. D. h., dem Brenner-Port 8A wird vorgewärmte Luft über den Wärmetauscher 40A, den Luftkanal 46A und die Luftöffnung 36A sowie Brennstoff über die Brennstoff-Zuführung 48A und die Brennstoffdüse 36A zugeführt, Luft und Brennstoff verbrennen innerhalb der Flammenwanne 4, wobei sich der Gasstrom an der Rückwand 28 umkehrt und das Abgas die Flammenwanne über den Brenner-Port 8B und den Wärmetauscher 40B verlässt, wobei letzterer durch das heiße Abgas thermisch aufgeladen wird. Was also nachstehend speziell für eine Seite A oder B beschrieben wird, gilt bei Strömungsumkehr für die andere Seite B bzw. A.

Gemäß der Darstellung in Fign. 6A und 6B sind in dem Gewölbe 32 der Flammenbrennerwanne 4 eine Mehrzahl von Strömungsgasdüsen 52c und 52d (52c(A) bzw. 52c(B) und 52d(A) bzw. 52d(B) je nach Seite des Ofens entsprechend der Lage der Wärmetauschern 40A bzw. 40B) vorgesehen. Die Strömungsgasdüsen 52c sind auf jeder Seite des Ofens in einer Reihen über die Länge des Gewölbes 32 verteilt, und die Strömungsgasdüsen 52d sind auf jeder Seite des Ofens in zwei Reihen über die Länge des Gewölbes 32 verteilt, wie in Fig. 6A dargestellt. Im Einzelnen sind im Gewölbe 32 auf der Seite des Wärmetauschers 40B in einer äußeren Reihe sechs Strömungsgasdüsen 52c(B)_{I-i} bis 52c(B)_{I-vi} vorgesehen, sind in einer mittleren Reihe fünf Strömungsgasdüsen 52d(B)_{I-i} bis 52d(B)_{I-v} vorgesehen und sind in einer unteren Reihe (II) fünf Strömungsgasdüsen 52d(B)_{II-i} bis 52c(B)_{II-v} vorgesehen. Eine entsprechende Anordnung gilt auch für die Seite des Wärmetauschers 40A.

Die Strömungsgasdüsen 52c sind in einem Bereich von typischerweise etwa ±45° in Längs- und Querrichtung gegenüber der Wandung des Gewölbes 32 geneigt (die Querneigung ist jeweils nur in Fig. 6A durch eine längliche Erstreckung dargestellt). Die Neigung der Strömungsgasdüsen 52c ist so gewählt, dass der Strömungsgasstrahl von der Abgasseite aus (also von der Seite des Brenner-Ports 8B aus, wenn der Brenner-Port 8A im Brennerbetrieb arbeitet, und umgekehrt) unter Berücksichtigung von Verwehungseffekten durch den Abgasstrom zuverlässig zu der Verbrennungszone (der Bereich, in der Figur mit "Flamme" bezeichnet) hin gerichtet ist. Die Strömungsgasdüsen 52c dienen also der abgasseitigen Eindüsung von Strömungsgas. Die Wege der Strömungsgasstrahlen von den in der dargestellten Situation aktiven Strömungsgasdüsen 52c aus sind in der Figur mit gepfeilten, strichpunktierten dünnen Linien näherungsweise dargestellt.

Das Strömungsgas wird hochkinetisch, d. h., mit hoher Geschwindigkeit in den Ofenraum eingedüst. Als geeignete Mindestgeschwindigkeit hat sich ein Bereich von 100 m/s bis 150 m/s herausgestellt. Je nach Größe des Ofens und des zurückzulegenden Weges kann auch eine Mindestgeschwindigkeit von bis hinab zu 50 m/s ausreichend sein. Dagegen kann insbesondere an Stellen, an denen der Gasstrom im Ofen dem Strömungsgas entgegengesetzt ist, wie etwa in der Nähe der Rückwand 28, eine höhere Mindestgeschwindigkeit von bis zu 250 m/s oder darüber erforderlich sein. In jedem Fall ist die Ausströmgeschwindigkeit des Strömungsgases sorgfältig zu kontrollieren, damit Beschädigungen durch Erosion an der Feuerfestverkleidung vermieden werden.

Durch das eingedüste Strömungsgas werden etwa Kohlendioxid (CO₂), Wasserdampf (H₂O) und Stickstoff (N₂) im Abgas mitgerissen und in die Verbrennungszone getragen und damit sowie mit dem Strömungsgas selbst die Verbrennungsgase verdünnt. Hierdurch werden Spitzentemperaturen innerhalb der Flamme reduziert, sodass die Produktion thermischer Stickoxide unterdrückt oder wenigstens signifikant eingedämmt werden kann. Die Anzahl der Strömungsgasdüsen 52c und 52d kann im Hinblick auf die Größe des Ofens bzw. der Verbrennungszone und den abzudeckenden Weg in Relation zu dem gewünschten Rezirkulations- und/oder Verdünnungsgrad abgeändert und optimiert werden.

Die Strömungsgasdüsen 52d sind in einem Bereich von typischerweise etwa ±45° in Längsrichtung, aber nur geringfügig in Querrichtung gegenüber der Wandung des Gewölbes 32 geneigt. Die Neigung der Strömungsgasdüsen 52d ist so gewählt, dass der Strömungsgasstrahl auf der Flammenseite (also von der Seite des Brenner-Ports 8A aus, wenn der Brenner-Port 8A im Brennerbetrieb arbeitet, und umgekehrt) zuverlässig zu der Verbrennungszone hin gerichtet ist. Die Strömungsgasdüsen 52d dienen also der flammenseitigen Eindüsung von Strömungsgas. Mitnahmeeffekte von Abgas in die Verbrennungszone treten dabei gegenüber Verdünnungseffekten und einer Beeinflussung der Verbrennungsprozesse durch das Strömungsgas zurück. Gegebenenfalls wird von der Flammenseite aus (über die Strömungsgasdüsen 52c) ein anderes Strömungsgas eingedüst als von der Abgasseite aus (über die Strömungsgasdüsen 52d). Auch kann das Strömungsgas von der Abgasseite aus mit höherer Geschwindigkeit eingedüst werden als von der Flammenseite aus. Die Wege der Strömungsgasstrahlen von den in der dargestellten Situation aktiven Strömungsgasdüsen 52d aus sind in der gewählten Perspektive der Figur nicht sichtbar.

Es versteht sich, dass auch jeweils nur eine Art der Strömungsdüsen 52c oder 52d vorgesehen sein kann.

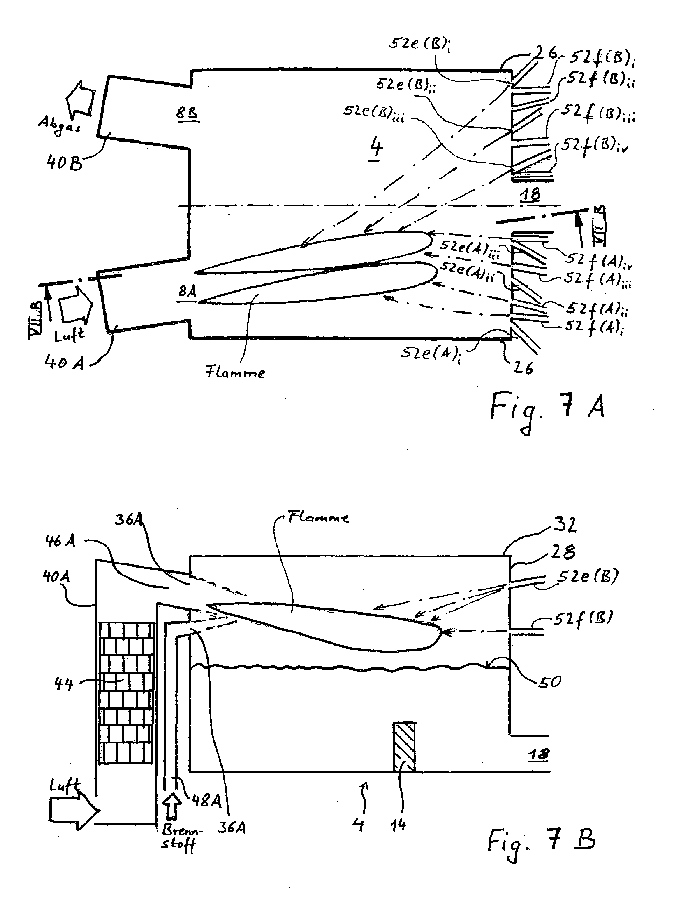

Fig. 7A ist eine schematisierte Draufsicht einer horizontal geschnittenen Anordnung eines Schmelzofens mit U-Flammenbrennerwanne und Wärmetauschern zur Verdeutlichung einer konstruktiven Abwandlungen der ersten Ausführungsform, und Fig. 7B ist eine entlang einer Linie VIIB-VIIB in Fig. 7A geschnittene Seitenansicht der Anordnung. Die Situation ist so dargestellt, dass der Brenner-Port 8A und der Wärmetauscher 40A im Brennerbetrieb arbeiten, während der Brenner-Port 8B und der Wärmetauscher 40B im Regenerativbetrieb arbeiten. D. h., dem Brenner-Port 8A wird vorgewärmte Luft über den Wärmetauscher 40A, den Luftkanal 46A und die Luftöffnung 36A sowie Brennstoff über die Brennstoff-Zuführung 48A und die Brennstoffdüse 36A zugeführt, Luft und Brennstoff verbrennen innerhalb der Flammenwanne 4, wobei sich der Gasstrom an der Rückwand 28 umkehrt und das Abgas die Flammenwanne über den Brenner-Port 8B und den Wärmetauscher 40B verlässt, wobei letzterer durch das heiße Abgas thermisch aufgeladen wird. Was also nachstehend speziell für eine Seite A oder B beschrieben wird, gilt bei Strömungsumkehr für die andere Seite B bzw. A.

Gemäß der Darstellung in Fign. 7A und 7B sind in der Rückwand 28 der Flammenbrennerwanne 4 eine Mehrzahl von Strömungsgasdüsen 52e und 52f (52e(A) bzw. 52e(B) und 52f(A) bzw. 52f(B) je nach Seite des Ofens entsprechend der Lage der Wärmetauschern 40A bzw. 40B) vorgesehen. Die Strömungsgasdüsen 52e und 52f sind in zwei übereinander befindlichen Bereichen über die Breite der Rückwand 28 verteilt. Im Einzelnen sind auf der Seite des Wärmetauschers 40B in einer oberen Reihe drei Strömungsgasdüsen 52e(B)ᵢ bis 52e(B)ᵢᵢᵢ vorgesehen, und sind in einer unteren Reihe vier Strömungsgasdüsen 52f(B)ᵢ bis 52f(B)ᵢᵥ vorgesehen. Eine entsprechende Anordnung gilt auch für die Seite des Wärmetauschers 40A.

Die Strömungsgasdüsen 52e (obere Reihe) sind in einem Bereich von typischerweise etwa bis 45° in horizontaler Richtung gegenüber der Wandung der Rückwand 28 von der Mitte des Ofens weg und in vertikaler Richtung geringfügig nach oben geneigt. Die Neigung der Strömungsgasdüsen 52e ist so gewählt, dass der Strömungsgasstrahl von der Abgasseite aus (also von der Seite des Brenner-Ports 8B aus, wenn der Brenner-Port 8A im Brennerbetrieb arbeitet, und umgekehrt) unter Berücksichtigung von Verwehungseffekten durch den Abgasstrom zuverlässig zu der Verbrennungszone (der Bereich, in der Figur mit "Flamme" bezeichnet) hin gerichtet ist. Die Strömungsgasdüsen 52e dienen also der abgasseitigen Eindüsung von Strömungsgas. Die Wege der Strömungsgasstrahlen von den in der dargestellten Situation aktiven Strömungsgasdüsen 52e aus sind in der Figur mit gepfeilten, strichpunktierten dünnen Linien näherungsweise dargestellt.

Das Strömungsgas wird hochkinetisch, d. h., mit hoher Geschwindigkeit in den Ofenraum eingedüst. Als geeignete Mindestgeschwindigkeit hat sich ein Bereich von 100 m/s bis 150 m/s herausgestellt. Je nach Größe des Ofens und des zurückzulegenden Weges kann auch eine Mindestgeschwindigkeit von bis hinab zu 50 m/s ausreichend sein. Dagegen kann insbesondere an Stellen, an denen der Gasstrom im Ofen dem Strömungsgas entgegengesetzt ist, wie etwa in der Nähe der Rückwand 28, eine höhere Mindestgeschwindigkeit von bis zu 250 m/s oder darüber erforderlich sein. In jedem Fall ist die Ausströmgeschwindigkeit des Strömungsgases sorgfältig zu kontrollieren, damit Beschädigungen durch Erosion an der Feuerfestverkleidung vermieden werden.

Durch das eingedüste Strömungsgas werden etwa Kohlendioxid (CO₂), Wasserdampf (H₂O) und Stickstoff (N₂) im Abgas mitgerissen und in die Verbrennungszone getragen und damit sowie mit dem Strömungsgas selbst die Verbrennungsgase verdünnt. Hierdurch werden Spitzentemperaturen innerhalb der Flamme reduziert, sodass die Produktion thermischer Stickoxide unterdrückt oder wenigstens signifikant eingedämmt werden kann. Die Anzahl der Strömungsgasdüsen 52e und 52f kann im Hinblick auf die Größe des Ofens bzw. der Verbrennungszone und den abzudeckenden Weg in Relation zu dem gewünschten Rezirkulations- und/oder Verdünnungsgrad abgeändert und optimiert werden.

Die Strömungsgasdüsen 52f (untere Reihe) sind in horizontaler Richtung geringfügig, in vertikaler Richtung kaum gegenüber der Wandung des Gewölbes 32 geneigt. Die Neigung der Strömungsgasdüsen 52f ist so gewählt, dass der Strömungsgasstrahl auf der Flammenseite (also von der Seite des Brenner-Ports 8A aus, wenn der Brenner-Port 8A im Brennerbetrieb arbeitet, und umgekehrt) zuverlässig zu der Verbrennungszone hin gerichtet ist. Die Strömungsgasdüsen 52f dienen also der flammenseitigen Eindüsung von Strömungsgas. Mitnahmeeffekte von Abgas in die Verbrennungszone treten dabei gegenüber Verdünnungseffekten und einer Beeinflussung der Verbrennungsprozesse durch das Strömungsgas zurück. Gegebenenfalls wird von der Flammenseite aus (über die Strömungsgasdüsen 52f) ein anderes Strömungsgas eingedüst als von der Abgasseite aus (über die Strömungsgasdüsen 52e). Auch kann das Strömungsgas von der Abgasseite aus mit höherer Geschwindigkeit eingedüst werden als von der Flammenseite aus. Die Wege der Strömungsgasstrahlen von den in der dargestellten Situation aktiven Strömungsgasdüsen 52f aus sind in der Figur mit gepfeilten, strichpunktierten dünnen Linien näherungsweise dargestellt.

Es versteht sich, dass auch jeweils nur eine Art der Strömungsdüsen 52e oder 52f vorgesehen sein kann.

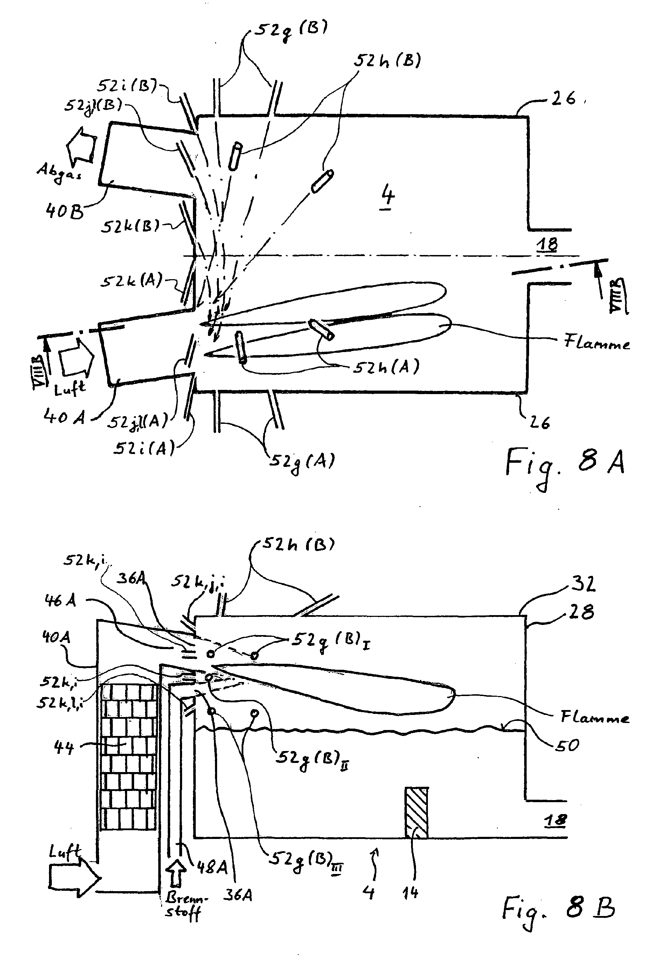

Fig. 8A ist eine schematisierte Draufsicht einer horizontal geschnittenen Anordnung eines Schmelzofens mit U-Flammenbrennerwanne und Wärmetauschern zur Verdeutlichung einer konstruktiven Abwandlungen der ersten Ausführungsform zur Verwirklichung der oben erwähnten Überlegung, und Fig. 8B ist eine entlang einer Linie VIIIB-VIIIB in Fig. 8A geschnittene Seitenansicht der Anordnung. Die Situation ist so dargestellt, dass der Brenner-Port 8A und der Wärmetauscher 40A im Brennerbetrieb arbeiten, während der Brenner-Port 8B und der Wärmetauscher 40B im Regenerativbetrieb arbeiten. D. h., dem Brenner-Port 8A wird vorgewärmte Luft über den Wärmetauscher 40A, den Luftkanal 46A und die Luftöffnung 36A sowie Brennstoff über die Brennstoff-Zuführung 48A und die Brennstoffdüse 36A zugeführt, Luft und Brennstoff verbrennen innerhalb der Flammenwanne 4, wobei sich der Gasstrom an der Rückwand 28 umkehrt und das Abgas die Flammenwanne über den Brenner-Port 8B und den Wärmetauscher 40B verlässt, wobei letzterer durch das heiße Abgas thermisch aufgeladen wird. Was also nachstehend speziell für eine Seite A oder B beschrieben wird, gilt bei Strömungsumkehr für die andere Seite B bzw. A.

Gemäß der Darstellung in Fign. 8A und 8B sind in der Stirnwand 30, dem Gewölbe 32 und den Seitenwänden 26 der Flammenbrennerwanne 4 eine Mehrzahl von Strömungsgasdüsen 52g bis 52l(52g(A) bzw. 52g(B) bis 52l(A) bzw. 52l(B) je nach Seite des Ofens) vorgesehen, die alle in etwa zu dem Austrittsbereich des Brenner-Ports 8 der jeweils gegenüberliegenden Seite hin ausgerichtet sind. Genauer gesagt sind in den Seitenwänden 26 jeweils insgesamt fünf Strömungsgasdüsen 52g in insgesamt drei Höhen über der Schmelzenoberfläche 50 angeordnet. In dem Gewölbe 32 sind je Seite (A und B) zwei Strömungsgasdüsen 52h angeordnet. In der Stirnwand 30 sind Strömungsgasdüsen 52i, 52j, 52k und 521 um die Brenner-Ports 8 herum angeordnet, und zwar die Strömungsgasdüsen 52i in Querrichtung außerhalb der Brenner-Ports (in der Nähe der Seitenwand 26), die Strömungsgasdüsen 52j über den Brenner-Ports 8, die Strömungsgasdüsen 52k in Querrichtung innerhalb der Brenner-Ports 8 und die Strömungsgasdüsen 521 unter den Brenner-Ports 8.

Die Strömungsgasdüsen 52g bis 52l sind in vertikaler und/oder horizontaler Richtung mehr oder weniger deutlich (ca. ±45° oder auch mehr) gegenüber der jeweiligen Wandung geneigt. Die Neigung der Strömungsgasdüsen 52g bis 521 ist so gewählt, dass der Strömungsgasstrahl von der Abgasseite aus (also von der Seite des Brenner-Ports 8B aus, wenn der Brenner-Port 8A im Brennerbetrieb arbeitet, und umgekehrt) unter Berücksichtigung von Verwehungseffekten durch den Abgasstrom zuverlässig den Bereich der aus dem Luftauslass 36A austretenden, vorerwärmten Verbrennungsluft, den Bereich der aus den Brennstoffdüsen 38A austretenden Brennstoffs oder den zwischen diesen beiden Strömen liegenden Mischbereich trifft. Dabei können die Strömungsgasstrahlen aller Strömungsgasdüsen 52g bis 521 den gleichen oder jeweils voneinander verschiedene der genannten Bereiche erreichen. Die Wege der Strömungsgasstrahlen von den in der dargestellten Situation aktiven Strömungsgasdüsen 52g bis 521 aus sind in der Figur mit gepfeilten, strichpunktierten dünnen Linien näherungsweise dargestellt.

Das Strömungsgas wird hochkinetisch, d. h., mit hoher Geschwindigkeit in den Ofenraum eingedüst. Als geeignete Mindestgeschwindigkeit hat sich ein Bereich von 100 m/s bis 150 m/s herausgestellt. Je nach Größe des Ofens und des zurückzulegenden Weges kann auch eine Mindestgeschwindigkeit von bis hinab zu 50 m/s ausreichend sein oder eine höhere Mindestgeschwindigkeit von bis zu 250 m/s oder darüber erforderlich sein. In jedem Fall ist die Ausströmgeschwindigkeit des Strömungsgases sorgfältig zu kontrollieren, damit Beschädigungen durch Erosion an der Feuerfestverkleidung vermieden werden.

Durch das eingedüste Strömungsgas werden etwa Kohlendioxid (CO₂), Wasserdampf (H₂O) und Stickstoff (N₂) im Abgas mitgerissen und in die Verbrennungszone getragen und damit sowie mit dem Strömungsgas selbst die Verbrennungsgase verdünnt. Hierdurch werden Spitzentemperaturen innerhalb der Flamme reduziert, sodass die Produktion thermischer Stickoxide unterdrückt oder wenigstens signifikant eingedämmt werden kann. Die Anzahl der Strömungsgasdüsen 52g bis 52l kann im Hinblick auf die Größe des Ofens bzw. der Verbrennungszone und den abzudeckenden Weg in Relation zu dem gewünschten Rezirkulationsgrad abgeändert und optimiert werden.

Anstelle oder zusätzlich zu der Abgasseite kann über wenigstens ausgewählte der Strömungsgasdüsen 52g bis 521 auch Strömungsgas von der Flammenseite aus in die Verbrennungszone eingedüst werden. In der dargestellten Situation können z. B. die Strömungsgasdüse 52g der Seitenwand 26 oder die seitlich angeordneten Strömungsgasdüsen 52i hierfür genutzt werden. Mitnahmeeffekte von Abgas in die Verbrennungszone treten dabei gegenüber Verdünnungseffekten und einer Beeinflussung der Verbrennungsprozesse durch das Strömungsgas zurück. Gegebenenfalls wird von der Flammenseite aus ein anderes Strömungsgas eingedüst als von der Abgasseite aus. Hierzu kann die Gaszufuhr zu den Strömungsgasdüsen 52g bis 52l umschaltbar sein. Auch kann das Strömungsgas von der Abgasseite aus mit anderer Geschwindigkeit eingedüst werden als von der Flammenseite aus. Es ist auch möglich, für die flammenseitigen Eindüsung von Strömungsgas zusätzliche Strömungsgasdüsen vorzusehen, die gegebenenfalls auch unter einem anderen Winkel zur Stirnwand 30 eingerichtet sind, um die Zielzone zuverlässig zu treffen.

Es ist hervorzuheben, dass die Anordnung von Strömungsgasdüsen 52a bis 521 gemäß Fign.4A und 4B bis 8A und 8B und ihre vorstehend beschriebene Betätigung eine Zusammenfassung einiger beispielhafter Abwandlungs- und Variationsmöglichkeiten darstellt. Es sind auch hiervon vielfältige weitere Abwandlungen denkbar. So können insbesondere die Anordnungen der Strömungsgasdüsen 52a bis 521 kombiniert werden. Die Anzahl der Strömungsgasdüsen 52a bis 52l kann je nach den Erfordernissen jeweils auf bis 2 reduziert oder bis 12 oder mehr erhöht werden.

Die vorliegende Erfindung wurde im Zusammenhang mit einem Glasofen mit U-Flammbrennerwanne beschrieben. Die Erfindung ist jedoch auch bei anderen Ofenformen ebenso anwendbar, wie etwa bei Querbrennerwannen, Längsbrennerwannen oder Überschlagsbrennerwannen.

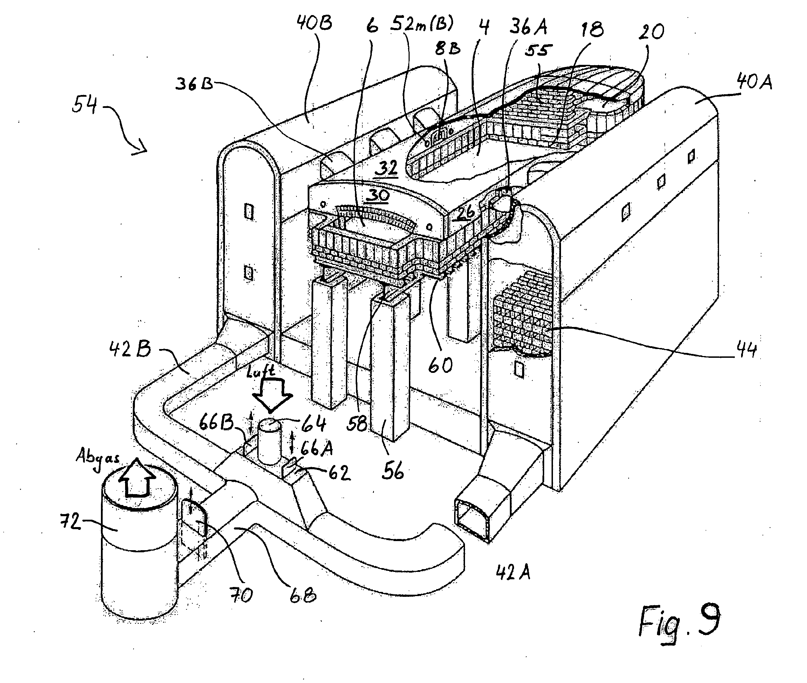

Fig. 9 ist eine perspektivische Ansicht einer Glasschmelzanlage mit Querbrennerwanne nach einer zweiten Ausführungsform der vorliegenden Erfindung.

Eine Glasschmelzanlage 54 der zweiten Ausführungsform weist eine Schmelzwanne 4, einen stirnseitigen Einlegevorbau 6, eine Arbeitswanne 20, die mit der Schmelzwanne 4 bzw. dessen hier nicht näher dargestellten Läuterbereich über einen Durchlass 18 verbunden ist, und zwei Wärmetauschern 40A und 40B auf. Über den Einlegevorbau 6 wird die Schmelzwanne 4 mit Rohstoff beschickt; die durchmischte und geläuterte Schmelze verlässt die Schmelzwanne 4 über den Durchlass 20. Hilfseinrichtungen zur Beeinflussung der Schmelze wie Trennwand zwischen Schmelz- und Läuterbereich, Sprudlerdüsen, Heizelektroden oder dergleichen sind hier nicht näher dargestellt, was ihre Verwendung jedoch nicht ausschließt.

Die Schmelzwanne 4 mit dem Einlegevorbau 6 und der Arbeitswanne 20 bilden eine gemeinsame Baueinheit mit zwei Seitenwänden 26, einer Stirnwand 30 und einem Gewölbe 32, wobei der Einlegevorbau 6 an der Stirnseite 30 angesetzt ist und die Baueinheit gegenüber der Stirnseite 30 in einer Art Apsis endet, welche von dem Hauptraum, der die Flammenwanne 4 mit dem Läuterbereich bildet, durch eine Zwischenwand 55 abgetrennt ist und die Arbeitswanne 20 beherbergt. Der Boden, die Wände 26, 30 und das Gewölbe 32 sind mit einer feuerfesten Auskleidung versehen, die Zwischenwand 55 besteht ebenfalls aus einem Feuerfestmaterial. Die Zwischenwand 55 kann Lücken aufweisen, sodass ein Luftaustausch zwischen den Bereichen der Schmelzwanne 4 und der Arbeitswanne 20 möglich ist. Die gesamte Baueinheit ist aufgeständert. Eine Mehrzahl von in zwei Längsreihen angeordnete Ständern 56 stützen zwei Längsträger 58, auf welchen wiederum eine dicht angeordnete Anzahl von Querträgern 60 ruht, die schließlich das Fundament für die Schmelzwanne 4, den Einlegevorbau 6 und die Arbeitswanne 20 bilden.

Die Schmelzwanne 4 wird durch je drei in den Seitenwänden 26 angeordnete Brenner-Ports 8 beheizt. Es sind zwei Wärmetauscher 40A und 40B vorgesehen, die jeweils entlang einer der Seiten der Brennerwanne 4 angeordnet sind. Der Wärmetauscher 40A ist über Luftkanäle 36A mit den Brenner-Ports 8 einer Seite verbunden, und der Wärmetauscher 40B ist über Luftkanäle 36B mit den Brenner-Ports 8 der anderen Seite verbunden. Im Übrigen entsprechen die Konstruktions- und Funktionsprinzipien der Brenner-Ports 8 und Wärmetauschern 40 der ersten Ausführungsform. Insbesondere arbeiten die Brenner-Ports 8 und Wärmetauschern 40 im regenerativen Wechselbetrieb, wie vorstehend für die erste Ausführungsform beschrieben.

Über einen gemeinsamen Zuluftverteilerkasten 62 werden die Luftleitungen 42A und 42B, die jeweils in den Wärmetauschern 40A bzw. 40B münden, mit Luft versorgt. Der Zuluftverteilerkasten 62 weist ein Zuluftansaugrohr 64 und zwei Zuluftschieber 66A, 66B auf. Über eine nicht näher dargestellte Fördereinrichtung (Gebläse oder dergleichen) wird Außenluft über das Zuluftansaugrohr 64 angesaugt und mittels der Zuluftschieber 66A, 66B an eine der Luftleitungen 42A, 42B entlassen. Über die Luftleitung 42A oder 42B gelangt die Luft in den gerade im Brennerbetrieb arbeitenden Wärmetauscher 40A oder 40B, nimmt dort Wärme von den Wärmespeichersteinen 44 auf und wird schließlich über die Luftleitungen 46A oder 46B den Brenner-Ports 8A oder 8B zugeführt, wo sie mit Brennstoff aus nicht näher dargestellten Brennstoffdüsen vermischt wird und diesen im Ofen verbrennt. Das Abgas verlässt den Ofen über die gegenüberliegenden Brenner-Ports 8B oder 8A, heizt die Wärmespeichersteine 44 des gegenüberliegenden Wärmetauschers 40B oder 40A auf und wird über die Luftleitung 42B oder 42A einer Vereinigungsstelle zugeführt, an welcher sich auch der Zuluftverteilerkasten 62 befindet. Von der Vereinigungsstelle der beiden Luftleitungen 42A, 42B führt eine Abgasleitung 68, die mittels eines Abgasschiebers 70 verschließbar ist, zu einem Kamin 72, über welchen das Abgas einer nicht näher dargestellten Abgasreinigungsanlage zugeführt wird. Die Zuluftschieber 66A, 66B können so ausgebildet sein, dass mit Öffnung des Luftweges einer Seite der jeweilige Abgasweg geschlossen wird und umgekehrt.

Beidseits jedes Brenner-Ports 8 ist jeweils eine Strömungsgasdüse 52m angeordnet, deren Austrittsrichtung im Wesentlichen senkrecht zur Seitenwand 26 steht oder geringfügig zur der gegenüberliegende Brenner-Ports 8A und 8B verbindenden Achse hin gerichtet ist. Über eine nicht näher dargestellte Strömungsgasbereitstellungseinrichtung ist den Strömungsgasdüsen 52m für jede Seite (A oder B) getrennt steuerbar ein Strömungsgas zuführbar. Die Strömungsgasbereitstellungseinrichtung kann Vorratsbehälter, Leitungen, Armaturen und Steuerelemente aufweisen. Das Strömungsgas wird so zugeführt, dass es mit einer hohen Geschwindigkeit in den Ofen eintritt. Das Strömungsgas wird dabei derjenigen Strömungsgasdüse 52m(A) oder 52m(B) zugeführt, die sich auf der Abgasseite des Ofens befindet. D. h., wenn sich die Brenner-Ports 8A im Brennerbetrieb befinden, wird das Strömungsgas den Strömungsgasdüsen 52m(B) zugeführt und werden die Strömungsgasdüsen 52m(A) inaktiviert, und wenn sich der Brenner-Port 8B im Brennerbetrieb befindet, wird das Strömungsgas den Strömungsgasdüsen 52m(A) zugeführt und werden die Strömungsgasdüsen 52m(B) inaktiviert.

Das Strömungsgas Zu Auswahl und Wirkungsweise des aus den Strömungsgasdüsen 52m zugeführten Strömungsgases ist auf die Ausführungen zum ersten Ausführungsbeispiel zu verweisen. Das eingedüste Strömungsgas durchdringt den Abgasstrom und reißt Bestandteile desselben mit sich. Die Austrittsgeschwindigkeit des Strömungsgases ist so gewählt, dass es die Bestandteile des Abgasstroms bis in die Verbrennungszone (Flamme) transportiert. Da die Strömungsrichtung des Strömungsgases bei dieser Querbrennerbauweise der Strömungsrichtung des Abgases im Wesentlichen entgegengesetzt ist, sind tendenziell hohe Austrittsgeschwindigkeiten zu wählen.

Es können auch mehrere Strömungsgasdüsen 52m auf jeder Seite jedes Brenner-Ports 8 über-und/oder nebeneinander angeordnet sein. Auch können oberhalb und unterhalb der Brenner-Ports 8 weitere Strömungsgasdüsen angeordnet sein. Die Strömungsgasdüsen können jeweils unterschiedliche Winkel zur Querströmungsrichtung der Verbrennungs- und Abgase aufweisen, sodass unterschiedliche Bereiche der Verbrennungszone erreicht werden.

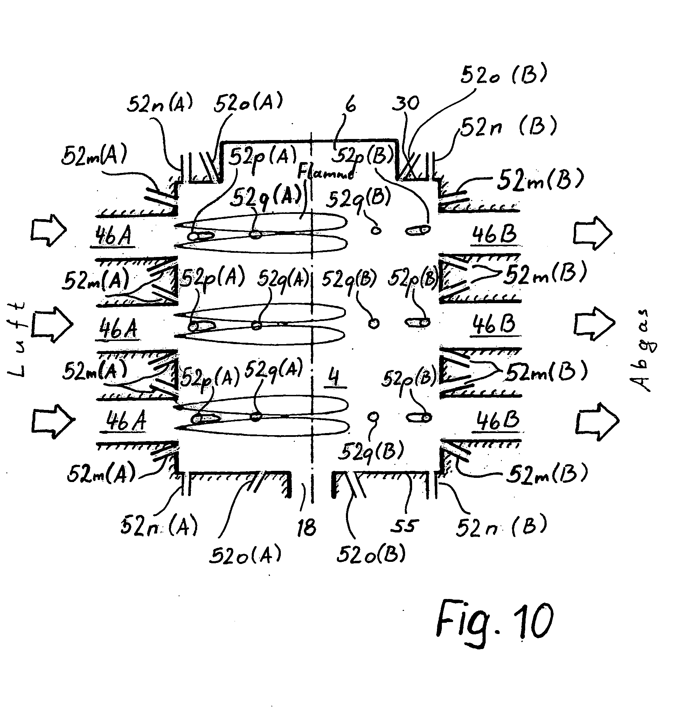

Fig. 10 ist eine schematisierte Draufsicht einer horizontal geschnittenen Anordnung eines Schmelzofens mit Querbrennerwanne zur Verdeutlichung möglicher Abwandlungen der zweiten Ausführungsform.

Gemäß der Darstellung in Fig. 10 sind neben vorstehend beschriebenen Strömungsgasdüsen 52m in den Seitenwänden 26 auch Strömungsgasdüsen 52n und 52o in der Stirnwand 30 und der Zwischenwand 55 sowie Strömungsgasdüsen 52p und 52q in dem Gewölbe 32 der Schmelzwanne 4 vorgesehen.

Die in der Stirnwand 30 und der Zwischenwand 55 vorgesehenen Strömungsgasdüsen 52n werden auf derjenigen Seite des Ofens aktiviert, die sich im Brennermodus befindet. Sie sind nahe den Seitenwänden 26 angeordnet und im Wesentlichen parallel zu den Seitenwänden 26 ausgerichtet. In vertikaler Richtung sind die Strömungsgasdüsen 52n so ausgerichtet, dass der Strömungsgasstrahl den Verbrennungsluftstrom aus den Luftauslässen 36, den Brennstoffstrom aus den Brennstoffdüsen 38 oder den Vermischungsbereich dazwischen, aber vorzugsweise vor der Verbrennungszone erreichen. Dabei können Strömungsgasdüsen 52n auf verschiedenen Höhen angeordnet sein, wobei z. B. Strömungsgas aus hoch gelegenen Strömungsgasdüsen 52n über den stirnseitigen und den endseitigen Brenner-Port 8 hinweg den Verbrennungsluftstrom des mittleren Brenner-Ports 8 erreicht und Strömungsgas aus tief gelegenen Strömungsgasdüsen 52n unter dem stirnseitigen und den endseitigen Brenner-Port 8 vorbei den Brennstoffstrom des mittleren Brenner-Ports 8 erreicht. Die Strömungsgasdüsen 52n dienen also der flammenseitigen Eindüsung von Strömungsgas in den Bereich vor der Verbrennungszone.

Die ebenfalls in der Stirnwand 30 und der Zwischenwand 55 vorgesehenen Strömungsgasdüsen 52o werden auch auf derjenigen Seite des Ofens aktiviert, die sich im Brennermodus befindet. Sie sind ebenfalls nahe den Seitenwänden 26 angeordnet, aber auf die Verbrennungszone auf der jeweiligen Seite gerichtet. Die Strömungsgasdüsen 52o dienen somit ebenfalls der flammenseitigen Eindüsung von Strömungsgas in die Verbrennungszone. Die Wirkungen einer solchen Anordnung wurden oben im Zusammenhang mit Abwandlungen der ersten Ausführungsform bereits beschrieben, worauf zur Vermeidung von Wiederholungen verwiesen wird.

Die Strömungsgasdüsen 52o können aber auch abgasseitig betrieben werden. Dabei kann z. B. im dargestellten Fall, in welchem die Brenner-Ports 8A befeuert werden, Strömungsgas aus den Strömungsgasdüsen 52o(B) durch die Abgaszone der stirn- und endseitigen Brenner-Ports 8B hindurch in die Verbrennungszone des mittleren Brenner-Ports 8A gelangen.

Die in dem Gewölbe 32 vorgesehenen Strömungsgasdüsen 52p werden auf derjenigen Seite des Ofens aktiviert, die sich im Regenerativmodus befindet. Sie sind nahe den Seitenwänden 26 angeordnet und im Wesentlichen parallel zu Querrichtung des Ofens und in einem vergleichsweise flachen Winkel zum Gewölbe 32 zum jeweils gegenüberliegenden Brenner-Port 8 ausgerichtet ausgerichtet. Die Strömungsgasdüsen 52n dienen also der abgasseitigen Eindüsung von Strömungsgas in die Verbrennungszone.

Die ebenfalls in dem Gewölbe 32 vorgesehenen Strömungsgasdüsen 52q werden auf derjenigen Seite des Ofens aktiviert, die sich im Brennermodus befindet. Sie sind tendenziell näher in der Mitte des Ofens als die Strömungsgasdüsen 52p angeordnet; sie stehen nahezu senkrecht zur Wandung des Gewölbes 32 und sind auf die Verbrennungszone der eigenen Seite gerichtet. Die Strömungsgasdüsen 52o dienen somit der flammenseitigen Eindüsung von Strömungsgas in die Verbrennungszone der eigenen Seite. Die Wirkungen einer solchen Anordnung wurden oben im Zusammenhang mit Abwandlungen der ersten Ausführungsform bereits beschrieben, worauf zur Vermeidung von Wiederholungen verwiesen wird.

Es versteht sich, dass die Strömungsgasdüsen 52q auch in größerer Zahl über die Querrichtung des Ofens verteilt sein können, auch in zwei oder mehr Reihen.

Es wurde bereits darauf hingewiesen, dass die Ausströmgeschwindigkeit des Strömungsgases eine Mindestgeschwindigkeit von etwa 50 m/s nicht unterschreiten sollte. Je nach Größe des Ofens und der Verbrennungszone, dem zurückzulegenden Weg und dem Winkel zur Hauptströmungsrichtung der Verbrennungs- und Abgase, aber auch bei sehr dünnen Strahlen, die im Abgas sehr stark abgebremst werden, kann auch eine Ausströmgeschwindigkeit von z. B. 150 - 250 m/s oder mehr erforderlich sein.

In der vorstehenden Ausführungsform war davon ausgegangen worden, dass die Strömungsgasdüse 52 ein glattes Rohr ist. Normalerweise wird auch mit einem glatten Rohr die maximale Austrittsgeschwindigkeit erreicht. Soweit jedoch eine Eindüsung mit Überschallgeschwindigkeit erforderlich ist, kann anstelle einer glatten rohrförmigen Strömungsgasdüse auch eine als Lavaldüse oder Venturidüse oder dergleichen ausgebildete Strömungsgasdüse vorgesehen sein. Besonders bei Überschallströmungen ist darauf zu achten, dass der Abstand zu einer gegenüberliegenden Wandung so bemessen ist, dass die feuerfeste Auskleidung durch den Gasstrahl nicht beschädigt werden kann.

Die Strömungsgasdüsen 52 können durch spezielle Düsensteine verwirklicht sein, die in der Größe einem entsprechenden Feuerfeststein der Wandauskleidung des Ofens entspricht und an dessen Stelle eingesetzt ist. Der Düsenstein ist mit der gewünschten Winkellage durchbohrt und bildet so auf einfache Weise eine glatte Strömungsgasdüse 52 aus. Auf der ofenäußeren Seite ist die Durchbohrung des Düsensteins mit einer geeigneten Zuleitung verbunden. Die Durchbohrung kann bei Bedarf ein Überschallprofil aufweisen.

Es kann Situationen geben, in welchen die Wandung, an welcher eine Strömungsgasdüse 52 platzierbar ist, sehr weit von der Zielzone des Strömungsgasstrahls entfernt ist. In solchen Fällen können Lanzen eingesetzt werden, die von der Wandung in den Ofeninnenraum hineinragen. Solche Lanzen können aus einem feuerfesten Material gefertigte Rohre sein. Bei den hohen Verbrennungstemperaturen ist der Einsatz von Stahlrohren ungeeignet. Es ist allerdings denkbar, zur Erhöhung der Stabilität eines Feuerfestrohres einen Stahlrohrkern zu verwenden und das Strömungsgas mit ausreichend niedriger Temperatur zuzuführen, um den Stahlrohrkern zu kühlen.

Aufgrund intensiver Vermischung in der Zielzone des Strömungsgases und der Verbrennungszone der herkömmlichen Flamme kann es zu unvollständiger Verbrennung kommen, was zur Bildung von Kohlenmonoxid (CO) führen kann. Es kann daher vorteilhaft sein, geringe Mengen von Sauerstoff oder eines sauerstoffhaltigen Gases an anderen Stellen des Ofens einzubringen, um das entstehende CO zu oxidieren. Der Sauerstoff (oder das sauerstoffhaltige Gas) kann z. B. über Verwirbelungsdüsen (gegebenenfalls auch in Lanzenform) zugeführt werden, um die Wirksamkeit zu erhöhen.

In einer weiteren, nicht näher dargestellten Abwandlung, die in jeder der vorstehend beschriebenen Ausführungsformen und Abwandlungen der Erfindung einsetzbar ist, sind wenigstens einige der Strömungsgasdüsen als Kombidüsen oder "Brennerdüsen" derart ausgebildet, dass durch wenigstens eine erste Düsenöffnung ein Oxidationsgas (Sauerstoff, Luft oder ein anderes sauerstoffhaltiges oder sauerstoffreiches Gas) ausgestoßen wird und durch wenigstens eine zweite Düsenöffnung ein Brenngas ausgestoßen wird. Die von diesen Brennerdüsen ausgestoßenen Gase verbrennen innerhalb des Ofeninnenraums, wobei die Verbrennung je nach Erfordernissen über- oder unterstöchiometrisch sein kann.

Die Brennerdüsen arbeiten als Hochimpulsbrenner derart, dass das Oxidationsgas mit hoher Geschwindigkeit ausgestoßen wird. Die Brennerdüsen sind in einem Teil des Ofens angeordnet, der im Wesentlichen reagierte Verbrennungsgase enthält (CO₂ und H₂O wie auch N₂ aus der Verbrennungsluft). Das mit hoher Geschwindigkeit ausgestoßene Oxidationsgas reißt die Verbrennungsprodukte mit sich und wird durch diese verdünnt. Dieses verdünnte Oxidationsgas vermischt sich mit dem Brenngas, wodurch eine Verbrennung eingeleitet wird. Idealerweise stellt sich eine Verdünnung des Oxidationsgases derart ein, dass die Verbrennung im Wesentlichen ohne sichtbare Flamme vonstatten geht. Das Brenngas wird durch das Oxidationsgas vollständig oxidiert, aber über eine größere Reaktionszone verteilt. Hierdurch werden Temperaturspitzen, die sonst thermisches NOx erzeugen würden, vermieden.

Die Verbrennungsprodukte der Brennerdüsen vermischen sich mit der rezirkulierten Ofenatmosphäre und werden durch ihren Eigenimpuls bis in die Zielzone getragen. Die Zielzone kann die Verbrennungszone der Brenner-Ports, der über die Brenner-Ports einströmende Luftstrom, der über die Brenner-Ports einströmende Brennstoffstrom oder der Bereich dazwischen sein. Die Wirkungen einer solchen Anordnung wurden oben im Zusammenhang mit Abwandlungen der ersten Ausführungsform bereits beschrieben, worauf zur Vermeidung von Wiederholungen verwiesen wird.

Die Brennerdüsen verbessern die Rezirkulation der Verbrennungsprodukte innerhalb des Ofens, und ihre Hauptfunktion besteht darin, die Verbrennungszone im vorstehend beschriebenen Sinne zu verdünnen, nicht aber, die Verbrennung mit der vorerwärmten Verbrennungsluft aus den Brenner-Ports zu ersetzen. Nichtsdestotrotz muss die Zufuhr von Luft und Brennstoff über die Brenner-Ports entsprechend der Zufuhr über die Brennerdüsen reduziert werden. Die Geschwindigkeit und daher der Druck, mit dem das Oxidationsgas der Brennerdüse zugeführt wird, ist so bemessen, dass der gewünschte Rezirkulationsgrad im Sinne der Erfindung erzielt wird.

Durch sorgfältige Auswahl der Ausströmgeschwindigkeit des Oxidationsgases aus den Brennerdüsen wie auch der Anzahl, Größe und Platzierung der Oxidationsgas-Auslassöffnungen der Brennerdüsen können die Rezirkulationsrate und die Eindringtiefe in die Zielzone kontrolliert werden. Die Eindringtiefe und Positionierung ist so zu optimieren, dass eine Beschädigung der feuerfesten Auskleidung des Ofens durch die Flamme der Brennerdüsen wie auch die heißen rezirkulierenden Gase zuverlässig vermieden wird.

Die Brennerdüsen sind besonders wirkungsvoll, wenn das Brennstoffgas von dem Oxidationsgas umgeben in den Ofeninnenraum eingedüst wird. Hierzu können mehrere in einer Reihe angeordnete Brenngasdüsen zwischen zwei Reihen von Oxidationsgasdüsen angeordnet sein, oder eine Brenngasdüse ist von mehreren Oxidationsgasdüsen ringförmig umgeben. Bei solchen Brennerdüsen ist es zweckmäßig, wenn das Oxidationsgas mit zumindest 80 m/s eingeblasen wird.

Bei der Platzierung der Brennerdüsen muss auch der Wärmeübergang von der Flamme der Brennerdüsen auf das Schmelzbad berücksichtigt werden. Dieser zusätzliche Wärmeübergang, der auf der der Flamme der Brenner-Ports gegenüberliegenden Seite des Ofens stattfindet, trägt zu einer gleichmäßigeren Oberflächentemperatur des Schmelzbades bei.

Im Übrigen sind die vorstehend im Zusammenhang mit der ersten oder zweiten Ausführungsform der Erfindung und ihren Abwandlungen angestellten Überlegungen hinsichtlich der Platzierung und Ausrichtung der Strömungsgasdüsen auf die Brennerdüsen sinngemäß anwendbar. Insbesondere sind die Brennerdüsen in den Seitenwänden 26, der Stirnwand 30, dem Gewölbe 32 und/oder der Rückwand 28 bzw. der Zwischenwand 55 platzierbar und entweder senkrecht zu der jeweiligen Wandung oder in einem Winkelbereich von typischerweise ±45°, ggf. auch mehr, geneigt auszurichten. Die Brennerdüsen sind als Strömungsgasdüsen im Sinne der Erfindung zu verstehen.

Im Zusammenhang mit den vorstehenden Ausführungsformen der Erfindung war von einer paarweisen Anordnung der Strömungsgasdüsen ausgegangen worden. Das ist sinnvoll, um bei Umschalten der Strömungsrichtung entsprechend dem regenerativen Wechselbetrieb der Brenner-Ports die jeweils gewünschte Zielzone treffen zu können. Eine paarweise Anordnung ist jedoch für die Wirksamkeit der vorliegenden Erfindung nicht zwingend. Vielmehr ist auch mit einer versetzten oder nur einseitigen Anordnung von Strömungsgasdüsen zumindest beim Betrieb eines Hauptbrenners eine Stickoxidverringerung möglich.

Zur Vermeidung von Beschädigungen an der feuerfesten Auskleidung des Ofens können des Weiteren Blasdüsen vorgesehen sein, die verhindern, dass Strömungsgasströme auf die Wandung treffen. Solche Blasdüsen können das gleiche Strömungsgas einblasen wie die eigentlichen Strömungsgasdüsen. Funktionell steht jedoch nicht ein Mitreißen von Rezirkulationsgasen im Vordergrund, sondern ein Ablenken von Strömungsgasströmungen.

Zusammenfassend wird durch den Einsatz der vorliegenden Erfindung eine wirksame Reduktion von Stickoxid-Emissionen erreicht. Der Betrieb ist einfach zu steuern und ist sicher. Die erforderlichen Einrichtungen sind einfach installierbar, selbst im laufenden Betrieb des Ofens. Die Investitions-, Wartungs- und Betriebskosten sind vergleichsweise gering. Der Wärmeübergang in das Schmelzbad kann vergleichmäßigt und intensiviert werden; der Gesamtwirkungsgrad einer mit der Erfindung ausgestatteten Anlage steigt.

Bei einer sorgfältigen Auswahl der Strömungsgase, der Anordnung der Strömungsgasdüsen und der Prozessparameter können auch Glasöfen anderer Bauarten von der Erfindung profitieren. So kann die Erfindung auch auf Öfen ohne Regenerationsbetrieb eingesetzt werden. Auch andere Hochtemperaturprozesse wie etwa bei Flammöfen und Wärmöfen für Aluminium oder Kupfer oder in der Stahlindustrie auf Luftbasis sind als Einsatzgebiete denkbar.

### Liste der Bezugszeichen

In der nachstehenden Bezugszeichenliste sind auch im deutschen Sprachgebrauch fachübliche englische Bezeichnungen in Klammern mit angegeben.
- 2: Schmelzofenanlage mit U-Flammenwanne (horseshoe flame furnace)
- 4: Schmelzwanne (tank: melter)
- 6: Einlegevorbau (doghouse)
- 8: Brenner-Port (burner-port)
- 10: Schmelzelektrode (electrode)
- 12: Sprudlerreihe (bubbler line)
- 14: Trennwand (wall)
- 16: Läuterbereich (tank: finer)
- 18: Durchlass (throat)
- 20: Arbeitswanne (refiner)
- 22, 24: Feeder
- 26: Seitenwand
- 28: Rückwand
- 30: Stirnwand (end wall)
- 32: Gewölbe (crown)
- 34: Palisadensteine
- 36: Luftkanal
- 38: Brennstoffdüse
- 40: Wärmetauscher
- 42: Luftleitung
- 44: Kammergitterung aus Wärmespeichersteinen (checkerwork)
- 46: Luft-Zuleitung
- 48: Brennstoff-Zuleitung
- 50: Schmelzen-Oberfläche
- 51: Ungeschmolzenes Schmelzgut
- 52: Strömungsgasdüse (52a - 52q)
- 54: Schmelzofenanlage mit Querbrennerwanne
- 55: Zwischenwad
- 56: Ständer
- 58: Längsträger
- 60: Querträger
- 62: Zuluftverteilerkasten
- 64: Zuluftansaugrohr
- 66: Zuluftschieber

- 68: Abgasleitung
- 70: Abgasschieber
- 72: Kamin

Suffixe und Indizes:
- A, B: Seiten der Anlage
- I, II, ...: Zähler für Düsenebenen oder -reihen
- i, ii, ...: Zähler für Düsen in einer Ebene oder Reihe

Es wird ausdrücklich darauf hingewiesen, dass die vorstehende Bezugszeichenliste integraler Bestandteil der Beschreibung ist.

## Patentansprüche

1. Verfahren zum Schmelzen von Glas, wobei einem Schmelzofen Brennstoff und Oxidator über eine Brenneranordnung zugeführt werden, um innerhalb des Ofens zu verbrennen,
**dadurch gekennzeichnet, dass**
zusätzlich zu dem über die Brenneranordnung zugeführten Brennstoff und Oxidator über eine oder mehrere Strömungsgasdüsen ein Strömungsgas mit einer Geschwindigkeit von wenigstens 50 m/s, vorzugsweise wenigstens 100 m/s besonders bevorzugt wenigstens 150 m/s, in den Ofen eingeführt wird.

2. Verfahren gemäß Anspruch 1,
**dadurch gekennzeichnet, dass**
das Strömungsgas Kohlendioxid, Wasserdampf, ein Oxidationsmittel wie etwa Luft oder reiner Sauerstoff, ein Brennstoff wie etwa Erdgas oder dergleichen, ein Inertstoff wie etwa Argon oder Kohlendioxid oder Wasserdampf oder Stickstoff oder dergleichen, oder eine Kombination mehrerer derselben ist oder aufweist.

3. Verfahren gemäß Anspruch 1 oder 2,
**dadurch gekennzeichnet, dass**
das Strömungsgas mit einer Geschwindigkeit von höchstens 326 m/s, besonders bevorzugt höchstens 200 m/s, in den Ofen eingeführt wird.

4. Verfahren gemäß einem der Ansprüche 1 bis 3,
**dadurch gekennzeichnet, dass**
das Strömungsgas als dünner Strahl in den Ofen eingeführt wird.

5. Verfahren gemäß Anspruch 4,
**dadurch gekennzeichnet, dass**
sich die Strömungsgasdüsen an einem oder mehreren der folgenden Orte befindet oder befinden: einer Seitenwand, einer Stirnwand, einer Rückwand, einer Zwischenwand, einem Gewölbe des Ofens.

6. Verfahren gemäß Anspruch 5,
**dadurch gekennzeichnet, dass**
sich das Strömungsgas senkrecht oder in einem komplexen Winkel zu der jeweiligen Wand in den Ofen eingeführt wird.

7. Verfahren gemäß einem der Ansprüche 1 bis 6,
**dadurch gekennzeichnet, dass**
der Strömungsgasstrahl oder die Strömungsgasstrahlen zu einer oder mehrerer der folgenden Zonen hin ausgerichtet ist oder sind: dem aus der Brenneranordnung austretenden Brennstoffstrom, dem aus der Brenneranordnung austretenden Oxidatorstrom, einer Zone zwischen dem Brennstoffstrom und dem Oxidatorstrom, der Verbrennungszone.

8. Verfahren gemäß einem der Ansprüche 1 bis 7,
**dadurch gekennzeichnet, dass**
das Strömungsgas abgasseitig in den Ofen eingeführt wird.

9. Verfahren gemäß einem der Ansprüche 1 bis 8,
**dadurch gekennzeichnet, dass**
der Strömungsgasstrahl oder die Strömungsgasstrahlen jeweils einen Brennstoffstrahl und einen oder mehrere den Brennstoffstrahl im Querschnitt ringförmig umgebenden Oxidatorstrahl/-en aufweist, wobei der/die Oxidatorstrahl/-en vorzugsweise eine höhere Eintrittsgeschwindigkeit als der Brennstoffstrahl aufweist, wobei wenigstens der/die Oxidatorstrahl/-en eine Geschwindigkeit von wenigstens 50 m/s, vorzugsweise wenigstens 100 m/s, besonders bevorzugt wenigstens 150 m/s aufweisen.

10. Verfahren gemäß einem der Ansprüche 1 bis 9,
**dadurch gekennzeichnet, dass**
der Schmelzofen zwei Brenneranordnungen oder Gruppen von Brenneranordnungen aufweist, wobei dann, wenn über eine erste der Brenneranordnungen oder Gruppen von Brenneranordnungen Brennstoff und Oxidator zugeführt wird, die Abgase über den Oxidatorweg der zweiten der Brenneranordnungen oder Gruppen von Brenneranordnungen abgeführt werden, wobei die Betriebsrichtung der Brenneranordnungen in einem vorbestimmten Takt, vorzugsweise etwa alle 20 Minuten, umgekehrt wird, wobei jeder der Brenneranordnungen bzw. jeder der Gruppen von Brenneranordnungen im Oxidatorweg ein Wärmetauscher vorgeschaltet ist, der eine Anzahl von Wärmespeicherelementen aufweist, die je nach Betriebsweg von dem Oxidator oder dem Abgas um- oder durchströmt werden, und wobei die Strömungsgasdüsen in Paaren symmetrisch gegenüber einer vertikalen, longitudinalen Mittelebene des Ofens angeordnet sind, wobei die Längsrichtung des Ofens einer Abzugsrichtung des Schmelzgutes entspricht, und wobei im gleichen Takt, in welchem die Brenneranordnungen ihre Betriebsrichtung umkehren, die Paare von Strömungsgasdüsen im Wechsel betrieben werden.

11. Vorrichtung zum Schmelzen von Glas, mit einem Schmelzofen und wenigstens einer Brenneranordnung, über welche dem Ofen Brennstoff und Oxidator zuführbar sind, um innerhalb des Ofens zu verbrennen,
**gekennzeichnet durch**
eine oder mehrere Strömungsgasdüsen, die zusätzlich zu der Brenneranordnung vorgesehen sind und über welche ein Strömungsgas, insbesondere in einem dünnen Strahl, in den Ofen einführbar ist,
und eine Strömungsgasbereitstellungseinrichtung, welche ausgelegt und eingerichtet ist, Strömungsgas mit einem Druck derart bereitzustellen, dass das Strömungsgas die Strömungsgasdüse/-n mit einer Geschwindigkeit von wenigstens 50 m/s, vorzugsweise wenigstens 100 m/s, besonders bevorzugt wenigstens 150 m/s, vorzugsweise mit einer Geschwindigkeit von höchstens 326 m/s, besonders bevorzugt höchstens 200 m/s, verlässt, wobei das Strömungsgas beispielsweise Kohlendioxid, Wasserdampf, ein Oxidationsmittel wie etwa Luft oder Sauerstoff, ein Brennstoff wie etwa Erdgas oder dergleichen, ein Inertgas wie etwa Argon oder Kohlendioxid oder Wasserdampf oder Stickstoff oder dergleichen, oder eine Kombination mehrerer derselben ist oder aufweist.

12. Vorrichtung gemäß Anspruch 11,
**dadurch gekennzeichnet, dass**
sich die Strömungsgasdüsen an einem oder mehreren der folgenden Orte befindet oder befinden: einer Seitenwand, einer Stirnwand, einer Rückwand, einer Zwischenwand, einem Gewölbe des Ofens, wobei die Ausströmrichtung des Strömungsgases senkrecht oder in einem komplexen Winkel zu der jeweiligen Wand in den Ofen eingeführt wird, und wobei der Strömungsgasstrahl oder die Strömungsgasstrahlen vorzugsweise zu einer oder mehrerer der folgenden Zonen hin ausgerichtet ist oder sind: dem aus der Brenneranordnung austretenden Brennstoffstrom, dem aus der Brenneranordnung austretenden Oxidatorstrom, einer Zone zwischen dem Brennstoffstrom und dem Oxidatorstrom, der Verbrennungszone.

13. Vorrichtung gemäß Anspruch 11 oder 12,
**dadurch gekennzeichnet, dass**
die Strömungsgasdüsen auf einer Abgasseite des Ofens angeordnet sind.

14. Vorrichtung gemäß einem der Ansprüche 11 bis 13,
**dadurch gekennzeichnet, dass**
der Schmelzofen zwei Brenneranordnungen oder Gruppen von Brenneranordnungen aufweist, wobei dann, wenn über eine erste der Brenneranordnungen oder Gruppen von Brenneranordnungen Brennstoff und Oxidator zugeführt wird, die Abgase über den Oxidatorweg der zweiten der Brenneranordnungen oder Gruppen von Brenneranordnungen abgeführt werden, wobei die Betriebsrichtung der Brenneranordnungen in einem vorbestimmten Takt, vorzugsweise etwa alle 20 Minuten, umgekehrt wird, wobei jeder der Brenneranordnungen bzw. jeder der Gruppen von Brenneranordnungen im Oxidatorweg ein Wärmetauscher vorgeschaltet ist, der eine Anzahl von Wärmespeicherelementen aufweist, die je nach Betriebsweg von dem Oxidator oder dem Abgas um- oder durchströmt werden, und wobei die Strömungsgasdüsen in Paaren symmetrisch gegenüber einer vertikalen, longitudinalen Mittelebene des Ofens angeordnet sind, wobei die Längsrichtung des Ofens einer Abzugsrichtung des Schmelzgutes entspricht, und wobei im gleichen Takt, in welchem die Brenneranordnungen ihre Betriebsrichtung umkehren, die Paare von Strömungsgasdüsen im Wechsel betrieben werden.

15. Vorrichtung gemäß einem der Ansprüche 11 bis 14,
**dadurch gekennzeichnet, dass**
das Strömungsgas ein Oxidationsgas und ein Brenngas aufweist, und die Strömungsgasdüse wenigstens eine oder mehrere Oxidatorauslassöffnungen und zur bzw. zu den Oxidatorauslassöffnung/-en eine benachbarte Brenngasauslassöffnung aufweist, wobei die Strömungsgasbereitstellungseinrichtung ausgelegt und eingerichtet ist, das Oxidationsgas und das Brenngas so bereitzustellen, dass der bzw. die Oxidatorstrahl/-en vorzugsweise eine höhere Eintrittsgeschwindigkeit als der bzw. die Brennstoffstrahl/-en aufweist, wobei wenigstens der Oxidatorstrahl eine Geschwindigkeit von wenigstens 80 m/s, vorzugsweise wenigstens 100 m/s, besonders bevorzugt wenigstens 150 m/s aufweist.
